(19) Europäisches Patentamt
European Patent Office
Office européen des brevets

(11) **EP 2 296 006 B1**

(12) **FASCICULE DE BREVET EUROPEEN**

(45) Date de publication et mention
de la délivrance du brevet:
**11.11.2015 Bulletin 2015/46**

(51) Int Cl.:
*G01S 13/42* *(2006.01)*    *G01S 13/93* *(2006.01)*
*G01S 13/72* *(2006.01)*

(21) Numéro de dépôt: **10176415.7**

(22) Date de dépôt: **13.09.2010**

(54) **Radar aéroporté à large couverture angulaire, notamment pour la fonction de détection et d'évitement d'obstacle**

Breitband-Flugzeugradarvorrichtung mit großem Erfassungswinkel, insbesondere für die Funktion der Kollisionsvermeidung

Airborne radar with wide angular coverage, in particular for the function for detecting and avoiding obstacles

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **15.09.2009 FR 0904394**

(43) Date de publication de la demande:
**16.03.2011 Bulletin 2011/11**

(73) Titulaire: **Thales**
**92200 Neuilly Sur Seine (FR)**

(72) Inventeurs:
• **Kemkemian, Stéphane**
**75014, PARIS (FR)**
• **Cornic, Pascal**
**F-29820 GUILERS (FR)**
• **Le Bihan, Patrick**
**29870, LANNILIS (FR)**
• **Nouvel, Myriam**
**78990, ELANCOURT (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A1- 2006 197 699**

• **MALMQVIST R ET AL: "On the Use of MEMS Phase Shifters in a Low-Cost Ka-band Multifunctional ESA on a Small UAV", MICROWAVE CONFERENCE, 2007. APMC 2007. ASIA-PACIFIC, IEEE, PISCATAWAY, NJ, USA, 11 décembre 2007 (2007-12-11), pages 1-4, XP031279994, ISBN: 978-1-4244-0748-4**
• **LE CHAVALIER F: "Space-Time Transmission and Coding for Airborne Radars", LEIDA-KEXUE-YU-JISHU = RADAR SCIENCE AND TECHNOLOGY,, vol. 6, no. 6, 1 December 2008 (2008-12-01), pages 411-421, XP009130674, ISSN: 1672-2337**

**Description**

La présente invention concerne un radar aéroporté à large couverture angulaire, notamment pour la fonction de détection et d'évitement d'obstacle équipant par exemple des drones.

Un problème technique concerne la réalisation d'une fonction radar de détection non coopérative d'obstacles aériens pour aéronefs, en particulier pour les drones. Cette fonction est essentielle pour permettre l'insertion d'aéronefs autopilotés dans le domaine aérien non ségrégué. Elle participe à la fonction d'évitement d'obstacle connue sous le nom de « Sense & Avoid ».

Un tel radar doit disposer d'un très large champ d'observation (typiquement ±110° en azimut et ±15° en élévation) et doit être capable de balayer l'espace en un temps très court, de l'ordre de grandeur de la seconde, compte tenu du temps nécessaire pour engager une manoeuvre d'évitement en présence de risque de collision. Ces caractéristiques correspondent approximativement à la capacité d'observation de l'environnement d'un pilote « humain » exigée pour une fonction du type « See & Avoid ».

Pour une telle application, Il est intéressant d'utiliser une antenne ou plusieurs antennes à champ large en émission, une pluralité d'antennes à champ large en réception et de former, en réception, de multiples faisceaux simultanément dans le domaine éclairé : il s'agit de la technique connue sous le nom de « Formation de Faisceau par le Calcul » ou « FFC ».

Cette solution est classiquement mise en oeuvre à l'aide de réseaux d'antennes dont les diagrammes formés doivent avoir une directivité suffisante pour localiser les cibles avec une bonne précision.

Dans le cas d'une application « Sense & Avoid » les principaux problèmes que doit résoudre le système d'antennes et plus généralement le système radar sont notamment, pour le système radar :

- Un temps de préavis avant collision minimal de l'ordre de la vingtaine de secondes pour des cibles dont la vitesse radiale relative VRR est comprise entre 0 et 400 m/s environ, VRR étant positive en rapprochement ;
- Une grande portée sur cible rapide, c'est-à-dire dont la fréquence Doppler est située en dehors de celui du fouillis de sol ;
- Une portée plus réduite sur cible lente, mais avec une bonne aptitude à la visibilité sous fouillis de sol.

Par la suite, par définition, la vitesse radiale relative VRR est comptée positive lorsqu'elle correspond à un rapprochement de la cible.

Pour le système d'antennes les principaux problèmes sont notamment :

- La directivité d'émission et de réception E/R doit être meilleure que 10°dans les deux plans pour la précision de localisation ;
- Les diagrammes d'antenne doivent présenter des lobes secondaires les plus bas possibles pour rejeter le fouillis de sol, en particulier lors des phases de vol à basse altitude et lorsque la cible est à faible vitesse ;
- Par ailleurs, la surface de l'antenne doit être suffisante pour assurer le bilan de portée avec une puissance d'émission raisonnable, typiquement 20 watt moyens ;
- En plus de ces contraintes techniques, le radar doit pouvoir être implanté sur différents types d'aéronefs, et les contraintes de volume d'électronique et de surface disponible pour l'antenne sont extrêmement fortes.
- Enfin, le coût global de l'électronique d'antenne doit être minimisé.

Il n'existe pas de dispositif radar répondant à l'ensemble de ces besoins. En effet, les systèmes actuels :

- Soit ne répondent pas au besoin en termes d'étendue angulaire et de cadence de renouvellement des mesures. Il s'agit en général de radars prévus pour d'autres applications prévues notamment pour des autodirecteurs de missiles ou des petits radars de navigation que l'on tente d'adapter à la problématique de la fonction « Sense & Avoid » ;
- Soit répondent au besoin en termes de couverture angulaire, en utilisant du balayage électronique. On peut noter qu'un tel système est coûteux et, s'il utilise des faisceaux fins nécessaires pour la précision de mesure, oblige à n'avoir qu'un très bref temps d'observation de la cible pour satisfaire la contrainte relative à la cadence de renouvellement des mesures. Dans ces conditions, un traitement Doppler est peu envisageable, la résolution Doppler étant trop grossière, voire impossible ;
- Soit répondent au besoin en termes de couverture et de précision angulaires, en utilisant les techniques classiques de FFC avec une antenne de réception à deux dimensions pleinement remplie de modules de réception. On peut noter qu'un tel système est coûteux dès qu'il est précis compte tenu du nombre de modules nécessaire.

Des systèmes fonctionnent sur le principe MIMO, selon l'expression anglosaxonne « Multiple Inputs Multiple Ouputs », utilisant un réseau d'antennes à multiples accès en entrées et en sorties. Un système général d'antenne en croix est notamment décrit dans l'article présenté à la conférence RADAR 2008 à Adélaïde (Australie) par le Pr. John ROULSTON en septembre 2008 : " The Post-War Development of Fighter Radar in Europe - A British Perspective". Tel quel, ce système utilise une pluralité de codes et leur mise en oeuvre peut s'avérer très coûteuse sans les particularités de l'invention. Un autre système censé adresser la problématique du S&A et utilisant le principe « MIMO a également été décrit au cours de la conférence "5th EMRS DTC Technical Conference - Edinburgh July 2008 : "Design Studies for an Airborne Collision Avoidance Radar - Dennis Longstaff, Mostafa Abu Shaaban, Stefan Lehmann, Filtronic Pty Ltd, Brisbane, Australia".Un tel système présente néanmoins les inconvénients suivant :

- sa portée est trop courte vis-à-vis du temps de préavis nécessaire pour effectuer une manoeuvre d'évitement ;
- il traite spécifiquement l'évitement des cibles en trajectoire de collision mais ne règle pas le problème de la séparation de trafic en horizontal et vertical.

Un document US 2006/197699 A1 décrit un module actif intégré à une antenne à balayage électronique équipant un radar aéroporté.

Un document MALMQVIST ET AL : « On the Use of MEMS Phase Shifters in a Low-Cost Ka-band Multifunctional ESA on a Small UAV », MICROWAVE CONFERENCE , 2007, APMC 2007, ASIA-PACIFIC; IEEE, PISCATAWAY, NJ, USA, 11 décembre 2007, pages 1-4.une antenne multifonctions à balayage électronique équipant un dispositive radar aéroporté.

Un document LE CHEVALIER F : « Space-Time Transmission and Coding for Airbornes Radars », LEIDA-KEXUE-YU-JISHU-RADAR SCIENCE AND TECHNOLOGY, vol. 6, no. 6, 1 décembre 2008, pages 441-421, décrit un mode de transmission radar colorée.

Un but de l'invention est notamment de réaliser un dispositif radar répondant à l'ensemble des besoins précédemment exprimés. A cet effet, l'invention a pour objet un dispositif radar aéroporté ayant une couverture angulaire donnée en élévation et en azimut comportant un système d'émission, un système de réception et des moyens de traitement effectuant des mesures de détection et de localisation de cibles, le système d'émission comportant :

- une antenne d'émission composée au moins d'un premier réseau linéaire d'éléments rayonnant focalisant un faisceau d'émission, lesdits réseaux étant sensiblement parallèles entre eux ;
- au moins un générateur de forme d'onde ;
- des moyens d'amplification des signaux d'émission produits par le ou les générateurs de forme d'onde ;
- des moyens de commande des signaux d'émission produits par le ou les générateurs de forme d'onde, lesdits moyens alimentant chaque élément rayonnant par un signal d'émission ;

les éléments rayonnant étant commandés pour produire simultanément un balayage électronique du faisceau d'émission en élévation et une émission colorée en élévation.

Dans un mode de réalisation possible l'antenne d'émission comportant P réseaux linéaires, les moyens de commande :

- commandent les signaux d'émission de façon à ce que chaque réseau linéaire produise un faisceau d'émission selon une direction propre, l'ensemble des faisceaux d'émission produits étant décalés angulairement en élévation ;
- comportent des commutateurs pour commuter les signaux d'émission successivement vers chacun des P réseaux linéaires ;

le balayage électronique à l'émission étant obtenu en commutant l'alimentation en signaux des P réseaux dont les faisceaux d'émission sont orientés dans P directions distinctes.

Le système de réception comporte par exemple au moins :

- un réseau linéaire d'éléments rayonnant orienté selon une direction orthogonale par rapport aux réseaux linéaires du système de réception ;
- des moyens de traitement produisant un faisceau de réception par formation de faisceau par le calcul en azimut.

Dans un mode de réalisation particulier, le système d'émission comporte au moins deux générateurs de forme d'onde, un premier générateur de forme d'onde fournissant un signal à une première fréquence F1 et un deuxième générateur de forme d'onde fournissant un signal à une deuxième fréquence F2, chaque réseau d'émission étant séparé en deux sous-réseaux, les éléments rayonnant du premier sous-réseau étant alimentés par le signal à la première fréquence F1 et les éléments rayonnant du deuxième sous-réseau étant alimentés par le signal à la deuxième fréquence F2, l'émission colorée étant obtenue en émettant sur le premier sous-réseau à la première fréquence F1 et en émettant sur le deuxième sous-réseau à la deuxième fréquence F2.

Dans ce mode de réalisation, les moyens de traitement du système de réception effectuent par exemple, dans le plan d'élévation, le calcul d'une voie somme $\Sigma$ et d'une voie différence $\Delta$ selon la technique monopulse à partir des signaux reçus d'une part à la première fréquence F1 et d'autre part à la deuxième fréquence F2.

Dans un mode de fonctionnement particulier, un radar selon l'invention effectue la détection et la localisation d'une cible en au moins deux étapes :

- dans une première étape le radar détecte une éventuelle cible avec une sensibilité de détection maximum et mesure au moins la vitesse de rapprochement de la cible vers le radar ;
- dans une deuxième étape, en cas de détection d'une cible, le radar effectue la mesure de la direction $\psi$ et de la distance R de la cible

La détection d'une cible utilise par exemple une analyse spectrale à très haute résolution suivie d'une intégration non cohérente de longue durée, ces deux caractéristiques étant adaptées à des cibles en trajectoire de collision. Avantageusement, un radar selon l'invention utilise par exemple deux formes d'onde, un générateur d'onde fournissant deux formes d'ondes, une première forme d'onde étant adaptée aux cibles rapides et localisées en fréquence Doppler ou en mesure de distance sur bruit thermique, la deuxième forme d'onde à portée réduite étant adaptée aux cibles lentes détectables sur fond de fouillis de sol. La première forme d'onde est par exemple une onde sinusoïdale continue.

Dans un mode de réalisation possible, la première forme d'onde utilise comme forme d'onde à coloration d'émission au moins deux ondes continues décalées en fréquence de k/T où T est le temps d'intégration Doppler et k un entier relatif non nul.

La première forme d'onde utilise par exemple comme fenêtre de pondération des transformées de Fourier en réception de polynômes de fonctions sinus ou cosinus d'ordre quelconque.

L'ambiguïté en mesures d'angle et distance résultant de l'emploi de la première forme d'onde à coloration d'émission est par exemple levée en émettant des ondes sinusoïdales espacées d'une pluralité d'écarts de fréquence.

Pour la première forme d'onde, on utilise par exemple des écarts de fréquence $\Delta F$ entre réseaux d'émission de signes opposés. Ces écarts de fréquence ont par exemple sensiblement la même valeur absolue.

Dans un mode de fonctionnement particulier, la levée d'ambiguïté en mesures d'angle et distance, pour la première forme d'onde, s'effectue d'abord en levant le rang d'ambiguïté sur la distance par l'utilisation de la pluralité d'écarts de fréquence. La levée d'ambiguïté sur les mesures en angle et en distance, pour la première forme d'onde, s'effectuent par exemple au sens des moindres carrés lorsque le rang d'ambiguïté en distance est levé.

Dans un mode de réalisation possible, la deuxième forme d'onde est une onde sinusoïdale pulsée.

L'émission colorée de la deuxième forme d'onde utilise par exemple l'émission d'au moins deux ondes sinusoïdales pulsées de fréquences porteuses F1, F2 décalées en fréquence de k/T où T est le temps d'intégration Doppler et k un nombre entier relatif non nul.

Dans un autre mode de réalisation possible, l'émission colorée de la deuxième forme d'onde utilise l'émission d'au moins deux ondes sinusoïdales pulsées de porteuses décalées en fréquence de FR/q où FR est la fréquence de répétition des impulsions et q un entier positif non nul, le paramètre q étant par exemple égal à 2.

Avantageusement d'autres exemples de coloration d'émission peuvent être utilisés.

L'émission colorée de la deuxième forme d'onde peut utiliser l'émission d'au moins deux ondes sinusoïdales pulsées de porteuses décalées en fréquence sensiblement de deux fois l'étalement en fréquence Doppler du fouillis de sol. L'émission colorée de la deuxième forme d'onde peut utiliser l'émission d'au moins deux ondes sinusoïdales pulsées de porteuses décalées en fréquence sensiblement de deux fois la fréquence Doppler maximale du fouillis de sol dans l'axe de l'aéronef porteur dudit dispositif radar.

Les signaux en réception étant transposés dans le domaine fréquentiel par une transformée de Fourier rapide FFT, l'émission colorée de la deuxième forme d'onde peut utiliser l'émission d'au moins deux ondes sinusoïdales pulsées de porteuses décalées en fréquence d'un écart $\Delta F$, le signe de cet écart étant permuté d'une séquence de transformée de Fourier FFT rapide à la suivante.

Les signaux en réception étant transposés dans le domaine fréquentiel par une transformée de Fourier rapide FFT, l'émission colorée de la deuxième forme d'onde peut utiliser l'émission d'au moins deux ondes sinusoïdales pulsées de porteuses décalées en fréquence d'un écart $\Delta F$, la valeur absolue de cet écart étant commuté de N séquences de FFT à N séquences FFT, le nombre N étant par exemple égal à 2.

L'émission colorée de la deuxième forme d'onde peut utiliser l'émission d'au moins deux ondes sinusoïdales pulsées modulées par des codes de phases orthogonaux. L'émission colorée de la deuxième forme d'onde utilise par exemple l'émission d'au moins deux ondes sinusoïdales pulsées modulées par des codes de phases orthogonaux obtenus par renversement temporel de l'un par rapport à l'autre.

L'émission colorée de la deuxième forme d'onde peut utiliser l'émission d'au moins deux ondes sinusoïdales pulsées modulées par des codes de Barker identiques mais inversés dans le temps.

La deuxième forme d'onde utilise par exemple comme fenêtre de pondération des transformées de Fourier en réception des polynômes d'ordre quelconque ayant comme variables des fonctions sinus ou cosinus.

D'autres caractéristiques et avantages de l'invention apparaîtront à l'aide de la description qui suit faite en regard de dessins annexés qui représentent :

- la figure 1, le principe de réalisation d'un système d'antenne utilisé dans un radar selon l'invention ;
- la figure 2, un exemple de réalisation d'un radar selon l'invention présentant plus particulièrement la partie émission et la partie réception ;
- la figure 3, une illustration d'un exemple de trajectoire de collision ou de quasi-collision potentielle d'un porteur d'un radar selon l'invention avec une cible potentielle ;
- la figure 4, une présentation de lieux accessibles à une collision pour différentes vitesses de cibles ;
- la figure 5, une représentation de l'éclairement d'une cible par un élément d'antenne d'un radar selon l'invention ;
- les figures 6a et 6b, des exemples de configurations spectrales de fouillis de sol et d'échos Doppler respectivement pour de faibles et de forts écarts de fréquence entre deux fréquences d'émissions F1, F2 ;
- la figure 7, par un synoptique, un mode de fonctionnement possible de la partie réception en mode veille ;
- la figure 8, un exemple de motif de forme d'onde pour une première forme d'onde possible ;
- la figure 9, un exemple de rapport signal sur bruit en fonction de la distance mesurée ;
- la figure 10, un autre exemple de motif d'onde pour la première forme d'onde précitée ;
- les figures 11a et 11b, un exemple de motif élémentaire pour une deuxième forme d'onde utilisée notamment pour une application à courte portée.

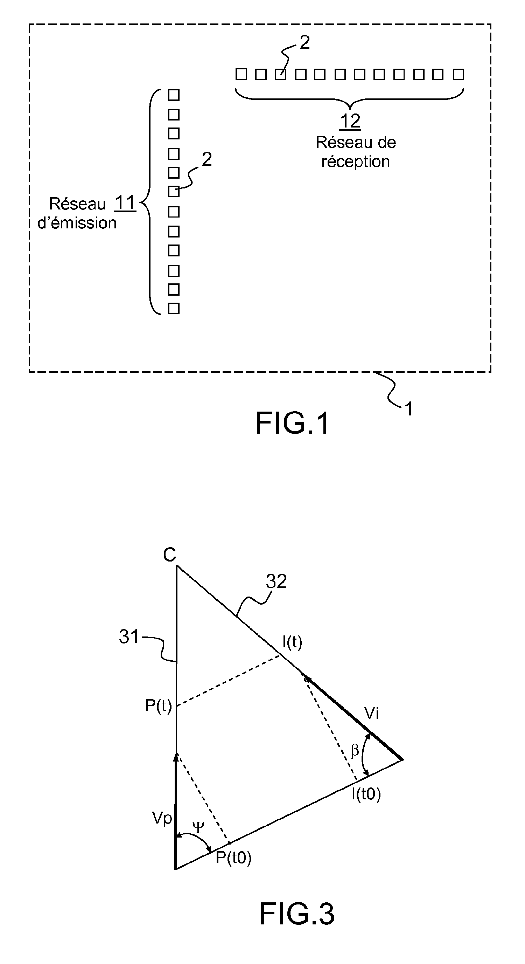

La figure 1 illustre le principe de réalisation d'un système d'antennes utilisé dans un radar selon l'invention. Ce système comporte deux réseaux 11, 12 d'éléments rayonnant 2, chacun formant une source élémentaire à l'émission et un récepteur élémentaire à la réception. Ils sont réalisés dans une même technologie, ce sont par exemple des pastilles métalliques, encore appelées « patch ».

Ces deux réseaux 11, 12 sont linéaires et orthogonaux entre eux. Un réseau 11 est utilisé pour l'émission et l'autre réseau 12 est utilisé pour la réception. Plus particulièrement, le premier réseau 11 est utilisé pour focaliser le faisceau d'antenne dans un plan à l'émission, par formation de faisceau par le calcul. Le deuxième réseau 12 est utilisé pour focaliser le faisceau d'antenne à la réception dans le plan orthogonal au plan précédent, par formation de faisceau par le calcul.

Compte tenu des domaines de couverture respectifs demandés, +/- 110° en azimut et +/- 15° en site, au moins un réseau vertical est utilisé en émission, au moins un réseau horizontal est utilisé en réception. Sous sa forme la plus simple, telle que représentée par la figure 1, l'antenne réseau 1 comporte donc un réseau 11 en colonne pour l'émission, disposé verticalement, et un réseau 12 en ligne pour la réception, disposé horizontalement. Les réseaux 11, 12 peuvent être éloignés l'un de l'autre et placés de façon quelconque pourvu que les directions de visée des éléments rayonnants 2 soient proches et leurs diagrammes de rayonnement voisins.

Les réseaux d'antenne 11, 12 peuvent avantageusement être en circuit imprimé, permettant ainsi une réalisation à faible coût.

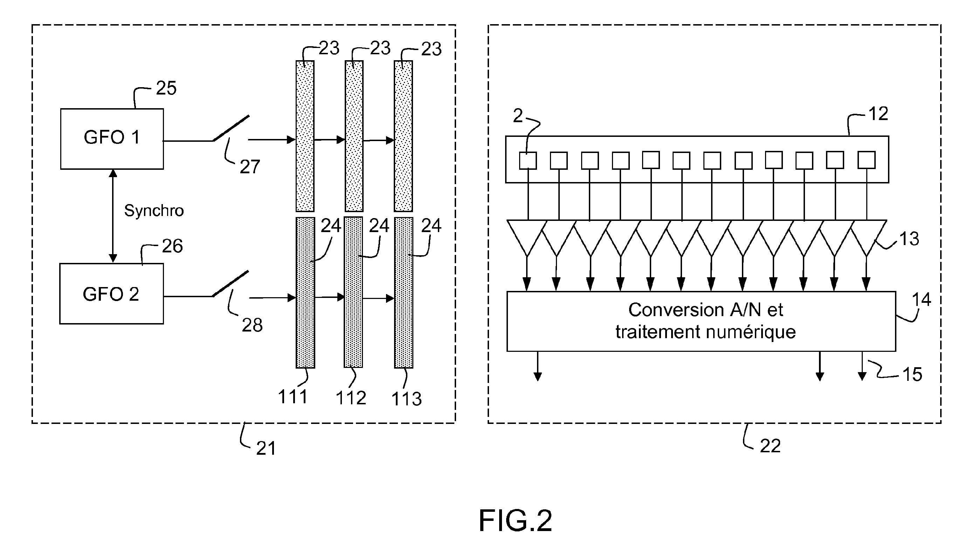

La figure 2 illustre un exemple de réalisation d'un système d'émission et de réception d'un radar selon l'invention, utilisant un système d'antenne selon le principe de réalisation de la figure 1. La partie émission 21 comporte par exemple trois réseaux linéaires d'émission 111, 112, 113 du type de celui 11 de la figure 1. Ces réseaux sont commutés de façon électronique par des commutateurs 23, 24. Chaque réseau est partagé en deux sous-réseaux 23, 24 formant par exemple une partie haute 23 et une partie basse 24 dans la mesure où l'antenne est disposée sensiblement verticalement. Les premiers sous-réseaux 23 sont par exemple alimentés par un signal sinusoïdal ayant une première fréquence F1 et les deuxièmes sous-réseaux 24 sont par exemple alimentés par un signal sinusoïdal ayant une deuxième fréquence F2. Les signaux sont fournis par des générateurs de forme d'onde 25, 26 via des amplificateurs de puissance non représentés. Des commutateurs 27, 28 permettent de commuter les signaux issus des générateurs 27, 28 vers l'un ou l'autre réseau. Un couple de commutateur est affecté à chaque réseau 111, 112, 113, seul un couple de commutateur est représenté en figure 2. Un balayage électronique très simple, utilisant les différents réseaux linéaires orientés différemment en azimut, et alimentés successivement par les commutateurs, est ainsi réalisé.

L'émission est colorée pour réaliser le principe MIMO avec N signaux simples à générer. Dans l'exemple de la figure 2, pour une forme d'onde destinée à la détection à grande portée, il s'agit de simples sinusoïdes continues aux fréquences F1 et F2, soit N = 2. Cette coloration de l'espace permet de réaliser un système de mesures angulaire à l'émission du type « mono-pulse » comme cela sera montré par la suite.

Un radar selon l'invention comporte par ailleurs des moyens de traitement non représentés effectuant des calculs de détection et de localisation de cibles selon des modes de fonctionnement qui seront décrits par la suite.

La figure 3 illustre un exemple de trajectoire de collision ou de quasi-collision.

Un point P représente un porteur à la vitesse $\overline{V}p$, un point I représentant un intrus, la cible, à la vitesse $\overline{V}i$. La position des points P et I est fonction du temps t, ils sont représentés sur la figure 3 à un temps t0. Le point C représente le point de collision.

Une condition nécessaire de collision est que droite PI doit appartenir au plan engendré par les deux vecteurs-vitesses. En d'autres termes, les demi-droites 31, 32 d'origines respectives P et I portées respectivement par les vecteur-vitesse $\overline{Vp}$ et $\overline{Vi}$ doivent avoir une intersection non nulle.

En ce qui concerne la condition suffisante de collision, si la condition précédente est remplie, il y a collision dans le plan engendré par les vecteurs-vitesses $\overline{Vp}$ et $\overline{Vi}$ si la relation suivante est vérifiée :

$$Vp.\sin\psi = Vi.\sin\beta \qquad (1)$$

Où $\psi$, $\beta$ sont respectivement les angles entres les segments PI et PC et entre les segments PI et IC. $\psi$ est l'angle d'azimut sous lequel est vue la cible I depuis le porteur P.

Une cible en trajectoire de collision est caractérisée notamment par la vérification des points suivant :

- l'angle d'observation de la cible est invariant dans le temps ;

- la vitesse radiale relative VRR est constante et positive ;

- le domaine de VRR est limité et fonction de l'angle d'observation ;

- l'angle d'aspect de la cible est constant.

L'angle d'observation de la cible est invariant dans le temps. Si $\overline{U}$ est le vecteur directeur de la cible dans un repère lié au vecteur-vitesse du porteur $\overline{Vp}$, la condition est : $\dfrac{d\left(\vec{Vp}\bullet\vec{U}\right)}{dt}=0$. En posant

$$:\vec{U}=\begin{pmatrix} u=\cos\psi\cos\theta \\ v=\sin\psi\cos\theta \\ w=\sin\theta \end{pmatrix}\text{, avec}:\vec{Vp}\equiv\begin{pmatrix} Vp \\ 0 \\ 0 \end{pmatrix}\text{, la condition nécessaire et suffisante de collision est :}$$

$$\dot{\psi}\sin\psi.\cos\theta + \dot{\theta}\cos\psi.\sin\theta = 0 \qquad (2)$$

Dans le cas général, la précédente condition nécessite une coordination des vitesses angulaires verticales et horizontales avec les positions angulaires $\psi$ et $\theta$. Ceci est peu vraisemblable dans des conditions de navigation aériennes obéissant à certaines règles, il serait en effet nécessaire qu'il y ait une rotation du plan (P,C,I). Dans ces conditions, une condition suffisante plus simple à exprimer est :

$$\frac{d\psi}{dt}=0 \quad et \quad \frac{d\theta}{dt}=0 \qquad (3)$$

La vitesse radiale relative VRR est constante et positive, en rapprochement. Dans ce cas, une condition nécessaire et suffisante de collision est :

$$\frac{dVRR}{dt}=0 \quad et \quad VRR>0 \qquad (4)$$

Le temps avant la collision est donc calculable par la relation : $T=\dfrac{R}{VRR}$.

Le domaine de vitesse radiale relative est VRR limité et fonction de l'angle d'observation :

Etant donné que $VRR = Vp.\cos\psi + Vi.\cos\beta$, cette relation s'écrit, en condition de collision :

$$VRR = Vp.\cos\psi \pm \sqrt{Vi^2 - Vp^2 \sin^2\psi} \qquad (5)$$

L'équation $VRR = Vp.\cos\psi - \sqrt{Vi^2 - Vp^2 \sin^2\psi}$ n'a de solution à VRR positive, donc en cas de collision, que si $Vi < Vp$. Cela correspond à un rattrapage de la cible I par le porteur P.

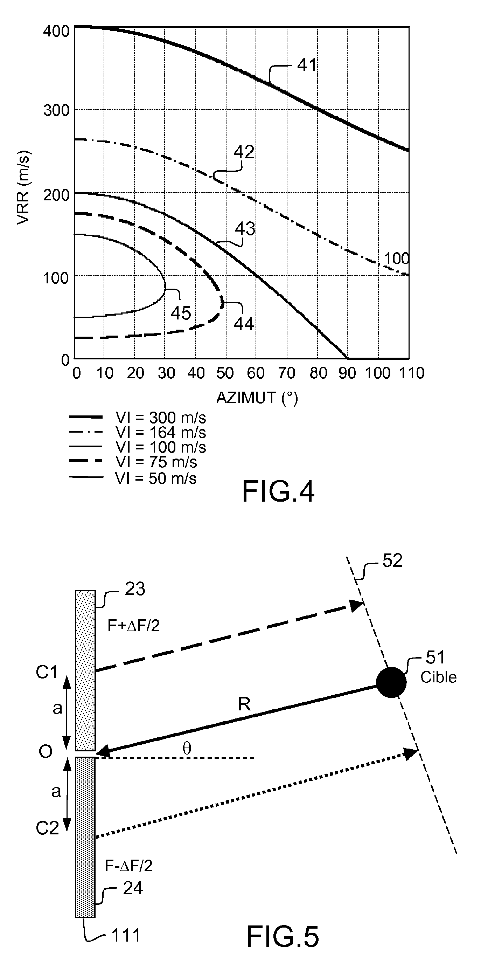

La figure 4 montre, par des courbes représentatives de l'équation (5), les lieux accessibles à une collision pour différentes vitesses de cible, un lieu étant défini par le couple ($VRR$, $\psi$), les lieux étant paramétrés par la vitesse $Vi$ de la cible. Les courbes 41, 42, 43, 44, 45 représentent la vitesse VRR en fonction de l'angle d'azimut conformément à l'équation (5) ci-dessus. Chaque courbe correspond à une vitesse $Vi$ de cible.

La figure 4 montre les éléments suivants :

Pour des cibles « rapides » de vitesse comprises entre la vitesse maximum, 300 m/s par exemple, jusqu'à $Vi > Vp\sqrt{2(1 - \cos\psi_{MAX})}$, soit 164 m/s pour $Vi$ = 100 m/s et $\psi_{MAX}$ = 110°, la détection est toujours exo-fouillis, c'est à dire le domaine en vitesse de cible, dans lequel une analyse Doppler de type « MTI » classique, connue de l'homme du métier, place systématiquement la cible en dehors de la zone Doppler du fouillis ou clutter de sol lorsqu'une forme d'onde sans ambiguïté de vitesse est utilisée. Ce domaine correspond à des cibles plutôt rapides et pouvant entrer en collision avec le porteur.

Pour toute cible telle que $Vi < Vp\sqrt{2(1 - \cos\psi_{MAX})}$, la détection est exo-fouillis à faible azimut et endo-fouillis à fort azimut. Le point de passage « endo-fouillis » correspond à un azimut de $\psi_C = \arccos\left(1 - \dfrac{Vi^2}{2Vp^2}\right)$.

Pour toute cible plus lente que le porteur, aucune collision ne peut avoir lieu au-delà d'un azimut de 90°. Même sur des cibles de $Vi$ très faible, il existe toujours des configurations de collision à faible azimut.

On constate toutefois que la réduction du domaine de $VRR$ avec l'angle n'est pas très sensible. Cette caractéristique apporte peu en termes de possibilité de remontée de la PFA de détection et par conséquent en termes d'amélioration de sensibilité, au mieux de l'ordre du demi dB.

Le fait que l'angle d'aspect de la cible est constant découle de la condition de collision de l'équation (1). Cela se traduit par une très faible fluctuation de la surface équivalente radar SER des cibles en trajectoire de collision. Ceci présente les avantages et inconvénients suivants :

- Un avantage dans le sens qu'un temps d'intégration Doppler important peut être exploité pour traiter les cibles en trajectoire de collision. ;

- Un inconvénient, car si la cible se présente sous un angle défavorable du point de vue de sa SER, cet état perdurera. Ceci rend souhaitable l'emploi de forme d'ondes à diversité de fréquence d'émission pour forcer la décorrélation de la SER de la cible.

L'invention prévoit, dans un mode de réalisation préférentiel, d'utiliser deux principales formes d'onde :

- une première forme d'onde pour des cibles rapides « exo-fouillis » en fréquence Doppler à grande portée ;
- une deuxième forme d'onde pour des cibles « endo-fouillis » et/ou à courte portée.

Le critère d'utilisation de l'une ou l'autre forme d'onde est, entre autres raisons, fondé sur la vitesse du porteur et celle de la cible recherchée.

Dans le cas de la première forme d'onde, le radar émet au mois deux ondes sinusoïdales continues orthogonales entre elles durant un cycle de traitement de durée T. Dans l'exemple de réalisation de la figure 2, on émet deux ondes, l'une à la fréquence F1 et l'autre à la fréquence F2, le signal à F1 étant émis par le premier générateur de forme d'onde 25 et le signal à F2 étant émis par le deuxième générateur de forme d'onde 26. Pour des raisons avantageuses qui seront développées par la suite, chaque cycle de traitement est relativement long, de l'ordre de 50 ms par exemple. Cela permet d'obtenir un très haut pouvoir séparateur en fréquence Doppler, typiquement moins de 1 m/s en bande X.

Les signaux émis à F1 et à F2 vers la cible sont séparés à la réception par leur propriété d'orthogonalité.

Comme on le verra lors de la description de la mise en oeuvre, cette séparation est avantageusement réalisée par Transformée de Fourier (FFT) sur la durée T précédente car on peut regrouper dans le même opérateur la séparation de voies et le filtrage Doppler.

Si la fenêtre d'analyse n'est pas pondérée, le critère d'orthogonalité est :

$$\left| F_1 - F_2 \right| = k/T \quad \text{avec k entier naturel supérieur à 1} \qquad (6)$$

Ceci revient à placer F2 dans les « zéros » de la FFT du signal F1 sur la durée T et réciproquement. Dans la pratique, la dynamique des signaux à traiter oblige à pondérer la séquence temporelle de durée T avant analyse. Cette pondération modifie la condition d'orthogonalité. A cet égard, il est commode de choisir comme fenêtre de pondération un polynôme en « cosinus » d'ordre N qui présente l'avantage de placer les zéros de la FFT de F1 ou de F2 en des positions multiples entiers de 1/T. De telles fenêtres de pondération W(i) sont données par la relation suivante :

$$W(i) = \sum_{k=0}^{k=N} a_k \cos\left( 2\pi.k. \frac{i}{N_{FFT}} \right) \qquad (7)$$

où $N_{FFT}$ est le nombre d'échantillons de chaque signal F1 ou F2 contenus dans la fenêtre de durée T. De tels polynômes de pondération sont, par exemple, les fenêtres de Hanning, Hamming, Blackmann, *etc.* ou encore des fenêtres « *Ad-Hoc* ». Elles sont bien connues de l'homme du métier.

La fréquence d'échantillonnage $F_{ech}$ doit être un multiple entier de 1/T. Dans ces conditions, l'orthogonalité est vérifiée si :

$$\left| F_1 - F_2 \right| = k/T \quad \text{avec k entier naturel supérieur à } N+1 \qquad (8)$$

Cette condition est valable s'il y a une ou plusieurs cibles dans le même filtres Doppler et que les distances entres cibles sont très inférieures à c.T/2. Compte tenu de la valeur élevée de T dans le cas présent (T = 50 ms) cette condition est toujours vérifiée car d'une part, la probabilité qu'il y ait plus d'une cible par filtre Doppler est très faible compte tenu de la résolution Doppler employée et d'autre part la valeur c.T/2 vaut 7500 km pour T = 50 ms.

La figure 5 représente un élément d'antenne de la partie émission, plus précisément elle représente un réseau 111 de la partie émission éclairant une cible 51 à une distance R très supérieure à 2a, a étant la demi-longueur d'un sous-réseau 23, 24. Le réseau 111 est formé de deux sous-réseaux de même longueur. Si le milieu du réseau d'émission 111 est l'origine O, les centres de phase $C_1$, $C_2$ des sous-réseaux 23, 24 et le vecteur directeur cible $\vec{U}$ ont pour coordonnées respectives :

$$\vec{OC_1} = \begin{pmatrix} 0 \\ 0 \\ a \end{pmatrix} \qquad \vec{OC_2} = \begin{pmatrix} 0 \\ 0 \\ -a \end{pmatrix} \qquad \vec{U} = \begin{pmatrix} u = \cos\psi\cos\theta \\ v = \sin\psi\cos\theta \\ w = \sin\theta \end{pmatrix}$$

Le premier sous-réseau 23, alimenté par le premier générateur 25, émet un signal sinusoïdal continu à la fréquence $F1 = F + \Delta F/2$. Le deuxième sous-réseau 24, alimenté par le deuxième générateur 26, émet un signal sinusoïdal à la fréquence $F2 = F - \Delta F/2$. Les différences de marche sur les signaux à F1 et F2 au niveau du plan de phase 52 se traduisent par des déphasage à l'émission $\delta\varphi_{1,2}$ donnés par les relations suivantes :

$$\delta\varphi_{1,2} = 2\pi \frac{F \pm \Delta F/2}{c} \vec{OC_{1,2}} \bullet \vec{U} = \begin{cases} -2\pi \dfrac{F + \Delta F/2}{c} a.\sin\theta & (9) \\[2ex] 2\pi \dfrac{F - \Delta F/2}{c} a.\sin\theta & (10) \end{cases}$$

la relation (9) s'appliquant pour le signal issu du premier sous-réseau 23 et la relation (10) s'appliquant pour le signal issu du deuxième sous-réseau 24. Les différences de marche ne dépendent que de l'angle d'élévation θ, de la fréquence porteuse $F$, des écarts de fréquence $\Delta F$ et de l'espacement a des centres de phase $C_1$, $C_2$ par rapport à l'origine O.

Par commodité on suppose que le centre de phase du dispositif de réception 22 est situé au point d'origine O. Tout autre emplacement voisin aboutirait au même résultat pratique. Avant tout traitement, à un coefficient multiplicatif près, le signal reçu par une antenne 12 située au point O, dans le plan de l'antenne d'émission 111 est la somme des deux termes $s_1(t)$, $s_2(t)$ suivant :

$$s_1(t) = \exp\left[-2\pi.j\frac{F+\Delta F/2}{c}\left(-a\sin\theta + 2R(t)\right)\right]\exp\left[2\pi.j.(F+\Delta F/2).t\right]$$

$$s_2(t) = \exp\left[-2\pi.j\frac{F-\Delta F/2}{c}\left(+a\sin\theta + 2R(t)\right)\right]\exp\left[2\pi.j.(F-\Delta F/2).t\right]$$

Le signal total reçu est $s(t) = s_1(t) + s_2(t)$. Il est aiguillé vers des filtres adaptés dont le but est, en profitant des propriétés des codes émis, de séparer les composantes émises par chacune des N sous-réseaux 23, 24 du réseau d'émission. Dans l'exemple de la figure 2, N = 2. En effet, ces N composantes ont été mélangées lors des réflexions sur les cibles 51.

En réalisant la corrélation, battement, avec le signal à la fréquence centrale $F$, on obtient la première partie du filtre adapté donnant un signal $S(tp)$ donné par la relation suivante :

$$S(tp) = \frac{1}{T}\int_{tp}^{T+tp} s(\tau + tp).\overline{\exp(2\pi.j.F.\tau)}d\tau \qquad (11)$$

Le temps «$tp$» correspond au trajet de propagation sur un écho à la distance $R = c.tp/2$.

On suppose que les signaux sinusoïdaux à F1 et F2 vérifient parfaitement la condition d'orthogonalité sur la durée T. En conséquence, si R est fonction du temps t, la relation (12) suivante est vérifiée :

$$S(t) = S_1(t) + S_2(t)\begin{cases} S_1(t) = \exp\left(+2j\pi\frac{\Delta F}{2}t\right)\exp\left[-2\pi.j.\frac{F+\Delta F/2}{c}\left(-a.\sin\theta + 2.R(t)\right)\right] \\ S_2(t) = \exp\left(-2j\pi\frac{\Delta F}{2}t\right)\exp\left[-2\pi.j.\frac{F-\Delta F/2}{c}\left(+a.\sin\theta + 2.R(t)\right)\right] \end{cases}$$

Les deux composantes de $S(t)$ peuvent être écrites selon les relations (13) et (14) suivantes :

$$\begin{cases} S_1(t) = \exp\left(+2j\pi\frac{\Delta F}{2}t\right)\times\exp\left[\frac{-2\pi.j}{c}\left(2F.R(t) - \frac{\Delta F}{2}a.\sin\theta\right)\right] \\ \times\exp\left[\frac{-2\pi.j}{c}\left(-F.a.\sin\theta + \Delta F.R(t)\right)\right] \\ \\ S_2(t) = \exp\left(-2j\pi\frac{\Delta F}{2}t\right)\times\exp\left[\frac{-2\pi.j}{c}\left(2F.R(t) - \frac{\Delta F}{2}a.\sin\theta\right)\right] \\ \times\exp\left[\frac{-2\pi.j}{c}\left(F.a.\sin\theta - \Delta F.R(t)\right)\right] \end{cases}$$

Puis, en posant R(t) = $R_0$ - $Vt$ et $\lambda$ = c/F :

$$\begin{cases} S_1(t) = \exp\left[+2j\pi\left(\frac{\Delta F}{2}(1+\frac{2V}{c})+\frac{2V}{\lambda}\right)t\right]\times\exp\left[\frac{-2\pi.j}{c}\left(2F.R_0-\frac{\Delta F}{2}a.\sin\theta\right)\right] \\ \times\exp\left[\frac{-2\pi.j}{c}\left(-F.a.\sin\theta+\Delta F.R_0\right)\right] \\ \\ S_2(t) = \exp\left[+2j\pi\left(\frac{-\Delta F}{2}(1-\frac{2V}{c})+\frac{2V}{\lambda}\right)t\right]\times\exp\left[\frac{-2\pi.j}{c}\left(2F.R_0-\frac{\Delta F}{2}a.\sin\theta\right)\right] \\ \times\exp\left[\frac{-2\pi.j}{c}\left(F.a.\sin\theta-\Delta F.R_0\right)\right] \end{cases}$$

Les termes $(1\pm\frac{2V}{c})$ traduisent les infimes variations de l'effet Doppler obtenu, d'une part sur un signal à

$F+\Delta F/2$ et, d'autre part, sur un signal à $F-\Delta F/2$. En posant $(1\pm\frac{2V}{c})\cong 1$ et $Fd=\frac{2V}{\lambda}$ , puis en remarquant que le terme de phase constant $\frac{-2\pi}{c}\left(2F.R_0-\frac{\Delta F}{2}a.\sin\theta\right)$ est le même sur les deux signaux, donc ne joue pas dans l'analyse différentielle qui va suivre, on peut réécrire la relation (12) selon la relation (12') suivante :

$$S(t)=S_1(t)+S_2(t)\begin{cases} S_1(t)\cong\exp\left[\overbrace{+2j\pi\left(\frac{\Delta F}{2}+Fd\right)t}^{\substack{\text{Effet Doppler + Effet du décalage}\\\text{de }\Delta F\text{ entre les deux signaux émis}}}\right]\times\exp\left[\overbrace{-2\pi.j.\left(-\frac{a.\sin\theta}{\lambda}+\frac{\Delta F.R_0}{c}\right)}^{\substack{\text{Phase à l'origine traduisant un}\\\text{couplage entre la distance et l'angle}}}\right] \\ \\ S_2(t)\cong\exp\left[+2j\pi\left(\frac{-\Delta F}{2}+Fd\right)t\right]\times\exp\left[-2\pi.j.\left(\frac{a.\sin\theta}{\lambda}-\frac{\Delta F.R_0}{c}\right)\right] \end{cases}$$

Dans le cas de l'orthogonalité parfaite, une transformée de Fourier, qui suit cette corrélation, complète le filtrage adapté à chacun des signaux $S_i$ et $S_2$ et permet de les séparer pour traitement ultérieur. A l'issue de cette transformée de Fourier, on obtient une paire de raies aux fréquences :

$$f1=\frac{\Delta F}{2}+Fd$$

$$f2=-\frac{\Delta F}{2}+Fd$$

Connaissant $\Delta F$, il est aisé de mesurer sans ambiguïté l'effet Doppler, (donc la vitesse de rapprochement VRR). Chacune de ces deux raies à $f1$ et $f2$ « porte » l'information de phase suivante :

$$\phi F_1=-2\pi\left(-\frac{a.\sin\theta}{\lambda}+\frac{\Delta F.R_0}{c}\right)$$

$$\phi F_2 = -2\pi \left( \frac{a.\sin\theta}{\lambda} - \frac{\Delta F.R_0}{c} \right)$$

L'information « utile » est contenue dans la phase différentielle, obtenue par exemple en calculant l'argument de la covariance $S_1.\overline{S_2}$ :

$$\Delta\phi F = 4\pi \left( \frac{a.\sin\theta}{\lambda} - \frac{R_0\Delta F}{c} \right) \qquad (14')$$

Avec $\lambda=c/F$. En plus de l'ambiguïté « classique » sur la mesure de la phase modulo $2\pi$, on constate une ambiguïté entre la distance et l'angle. On peut jouer sur l'influence de la distance en agissant sur l'écart de fréquence $\Delta F$. A titre d'exemple, on peut prendre l'exemple numérique suivant :

- F = 10 GHz
- a = 0,06 m
- $\Delta F$ = 50 kHz, vérifiant la condition d'orthogonalité.

Soit :

$$\frac{\Delta\phi F}{2\pi} = 4.\sin\theta - 0,33.R_{KM}$$

Pour une distance nulle, la mesure angulaire est non ambiguë sur $\sin\theta = \pm 0.125$, soit sur $\pm 7°$.
Pour un angle donné, l'ambiguïté distance est de 3 km.
Dans un autre exemple numérique :

- F = 10 GHz
- a = 0,06 m
- $\Delta F$ = 80 Hz, vérifiant la condition d'orthogonalité.

Soit :

$$\frac{\Delta\phi F}{2\pi} = 4.\sin\theta - 0,0005.R_{KM}$$

Pour une distance nulle, la mesure angulaire est, comme précédemment, non ambiguë sur $\sin\theta = \pm 0.125$.
Pour un angle donné, l'ambiguïté distance est de 1875 km ; cependant, à 10 km, le biais est de 1.8° et nécessite d'être corrigé.
Avantageusement, des voies sommes $\Sigma$ et différence $\Delta$ peuvent être formées à l'émission en phase de veille.
Il est à noter que dans un premier cas, lorsque le couplage de la distance sur l'angle est important, il n'est pas possible de former efficacement des voies somme et différence ($\Sigma$, $\Delta$) car de telles voies sont formées par addition et soustraction cohérente des signaux $S_1$ et $S_2$. Dans ces conditions, seule moins de la moitié de la plage d'ambiguïté de phase différentielle ($-\pi$, $+\pi$) peut être utilisée.
Dans un deuxième cas, la formation de voies $\Sigma$ et $\Delta$ est en revanche souhaitable, sommation cohérente, lorsque le couplage de la distance sur l'angle est très faible. Ceci permet notamment :

- d'améliorer la sensibilité de la détection grâce à la sommation cohérente ;

- et de mettre à profit une éventuelle pondération du réseau d'émission pour diminuer les lobes secondaires en élévation du système d'antenne dans sa globalité, en effet le réseau de réception n'a pas ou peu de sélectivité verticale.

La pondération est appliquée globalement sur les deux sous-réseaux d'émission. L'utilisation séparée des signaux provenant de chaque sous réseaux, comme dans le premier cas, ne permet pas de profiter de cette pondération.

Pour ces deux raisons, il est souhaitable que la veille s'effectue avec une forme d'onde permettant la formation de voies $\Sigma$ et $\Delta$, pour éviter de détecter des échos de forte SER par les lobes secondaires du dispositif antennaire. En théorie, il serait possible de former une pluralité de couples $(\Sigma,\Delta)$ et de profiter de la pondération quelque soit la forme d'onde du premier cas ou du deuxième cas. Cependant cela nécessiterait de contrôler l'alimentation de chaque élément 2 de chaque sous-réseau. Cette solution serait coûteuse et n'est pas retenu ici pour cette raison.

En revanche, en phase de poursuite correspondant au premier cas, lorsque le couplage Distance - Angle est important, on travaille en mode « interférométrique » pour exploiter la totalité de la plage d'ambiguïté de phase différentielle $(-\pi, +\pi)$.

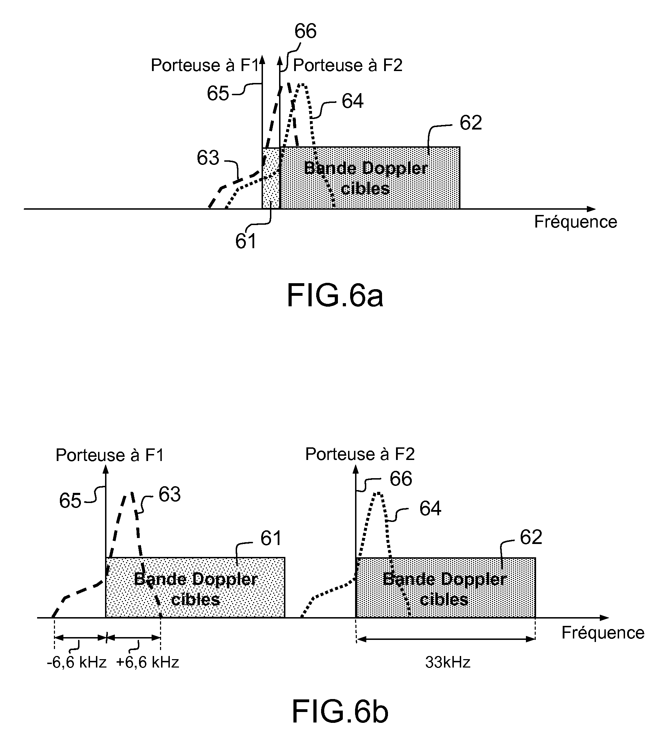

Les figures 6a et 6b illustrent à titre d'exemple des configurations spectrales respectivement lorsque l'écart de fréquence $\Delta F$, entre les fréquences F1 et F2, est respectivement très inférieur à 1 kHz et supérieur à 33 kHz. Le domaine Doppler des cibles 61, 62 et du fouillis de sol 63, 64 est convolué par chacune des porteuses 65, 66 à fréquences F1 et F2. Un premier fouillis 63 et une première bande Doppler 61 correspondent à la porteuse de fréquence F1 émise par le premier sous-réseau 23, un deuxième fouillis 64 et une deuxième bande Doppler 62 correspondent à la porteuse de fréquence F2 émise par le deuxième sous-réseau 24.

Dans l'exemple considéré, la bande totale des signaux, comportant les échos de cibles et de fouillis, occupe 500 m/s, soit 33 kHz pour une vitesse de porteur $Vp = 100$ m/s et une vitesse de cible $Vi < 300$ m/s. Le fouillis de sol occupe la bande $\pm$ 100 m/s, pour $Vp = 100$ m/s, soit $\pm$ 6,6 kHz. Deux choix d'écart $\Delta F$ sont possibles pour cette première forme d'onde « exo-fouillis ».

La figure 6a illustre le premier choix où l'écart $\Delta F$ est très inférieur à la bande de fouillis de sol pour ne pas majorer inutilement la zone « endo-fouillis ». On peut alors choisir des valeurs de $\Delta F$ de l'ordre de la centaine ou de quelques centaines de Hz.

La figure 6b illustre le deuxième choix où l'écart $\Delta F$ est supérieur à la bande totale des échos de cibles et de fouillis. Dans l'exemple de la figure 6b, on choisit une valeur supérieure à 40 kHz, donc supérieur à la bande totale de 33 kHz.

Il est à noter que la première configuration, illustrée par la figure 6a, conduit à un faible couplage de la distance sur l'angle et ne permet de séparer que les échos de cibles hors zone de fouillis alors, qu'au contraire, il est très fort dans la seconde configuration, illustrée par la figure 6b, mais permet de séparer tous les signaux, fouillis et cibles.

Le cas d'un très faible écart de fréquence $\Delta F$, par exemple 80 Hz, est une configuration où seuls la fréquence Doppler et l'angle sont mesurés sans ambiguïté. La mesure de distance est en revanche impossible. Avantageusement, l'invention utilise par exemple :

- la première configuration en phase de veille pour obtenir une détection sensible et la vitesse radiale relative VRR et l'angle $\psi$ de la cible ;
- la seconde configuration en phase de poursuite pour obtenir une mesure de distance.

Il est possible, en phase de veille, d'utiliser un écart de fréquence $\Delta F$ nul. Dans ce cas seule une voie SOMME « $\Sigma$ » est formée. Seule la mesure de la vitesse radiale relative VRR est alors effectuée en veille.

Typiquement, le temps d'exploration et de poursuite des cibles du domaine « grande portée, grande vitesse », correspondant à cette première forme d'onde, est de l'ordre de la seconde, par exemple 900 millisecondes, pour assurer une poursuite correcte des cibles dangereuses. Ce domaine est par exemple subdivisé en trois sous-domaines d'élévation, chaque sous-domaine étant couvert par un réseau d'émission 111, 112, 113 tel qu'illustré par la figure 2. A cet effet, les faisceaux d'antenne sont décalés entre eux. Le premier réseau 111 couvre par exemple le sous-domaine -15° à -5°, le deuxième réseau 112 couvre par exemple le sous-domaine -5° à +5° et le troisième réseau 113 couvre par exemple le sous-domaine +5° à +15°. Chaque sous-domaine est donc exploré et les cibles poursuivie pendant par exemple 300 millisecondes environ. Pour chaque sous-domaine, le temps total d'observation peut être subdivisé en par exemple six intervalles d'intégration Doppler d'environ 50 millisecondes chacun.

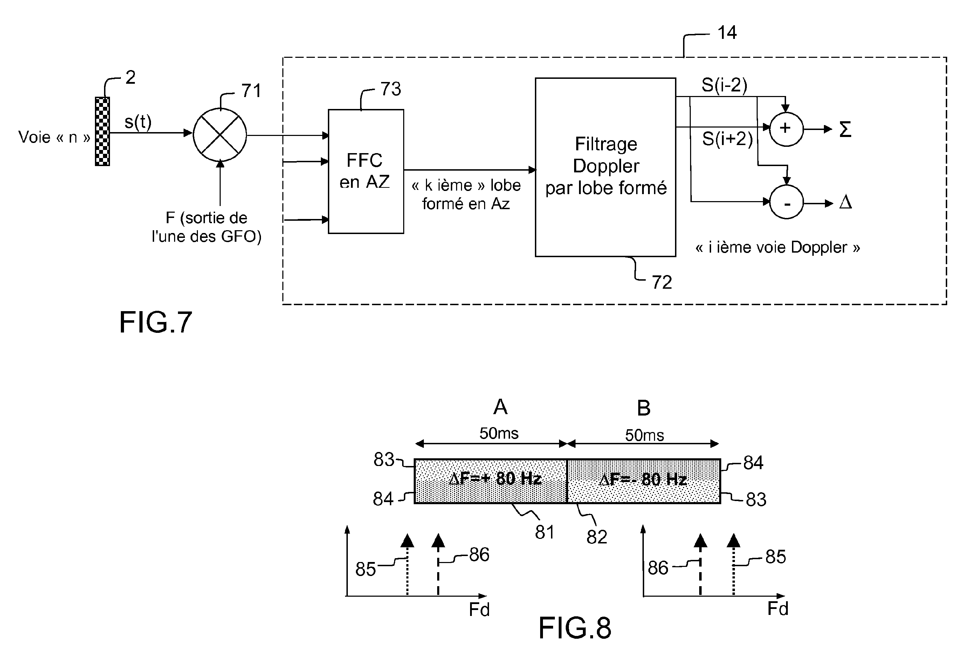

La figure 7 illustre un synoptique possible de réception en mode veille. Le signal reçu s(t) sur une voie de réception, représentée par une source 2 du réseau de réception 12, est mélangé par un mélangeur hyperfréquence 71 avec la fréquence centrale F issue par exemple d'un des générateurs de forme d'onde. Seule une voie est représentée, le traitement 14 étant le même pour les autres voies.

Dans ce synoptique, la séparation des voies à l'émission ainsi que le filtrage Doppler sont regroupés dans la FFT « Filtrage Doppler » 72 précisée par l'ensemble des équations (15) ci-après. Cette séparation est précédée de la Formation de Faisceau par Calcul en Azimut 73. D'autres architectures sont cependant possibles. En particulier, les opérations de traitement sont linéaires et peuvent être permutées, la FFC 73 et le filtrage Doppler 72. Le choix de l'ordre des opérations est avant tout dicté par des considérations de puissance de calcul nécessaire. En effet, selon l'ordre choisi, des configurations inutiles peuvent être exclue et de la ressource de calcul économisée. La suite de la description se réfère cependant à ce synoptique illustré par la figure 7.

La figure 8 illustre un exemple de motif de forme d'onde en veille. La forme d'onde en veille, lorsqu'il n'y a aucune cible en accrochage ou en poursuite de façon établie, consiste en la répétition continue de l'émission du motif élémentaire illustré par la figure 8.

Le motif de cette forme d'onde de veille est constitué d'une paire de séquences 81, 82 d'environ 50 ms, soit un motif élémentaire d'environ 100 ms. Chaque séquence est constituée par l'émission de deux sinusoïdes, une sinusoïde 83 à F1 appliquée au premier sous-réseau 23 de l'antenne d'émission et une autre sinusoïde 84 à F2 appliquée au deuxième sous-réseau 24 de l'antenne d'émission. Le décalage entre F1 et F2 est ΔF autour d'une porteuse en bande X à la fréquence F. Le signe du décalage est inversée entre la 1$^{ère}$ séquence FFT et la 2$^{nde}$. Dans le cas de la forme d'onde de veille, et avec les valeurs indiquées à la figure ci-dessus, la présence d'une cible se caractérise par deux raies 85, 86 espacées de quatre filtres.

Les voies somme Σ et différence Δ sont formées conformément à l'ensemble (15) des équations suivantes :

$$\Sigma_A(i) = S_A(i+2) + S_A(i-2)$$
$$\Delta_A(i) = j\big(S_A(i+2) - S_A(i-2)\big)$$

$$(15)$$

$$\Sigma_B(i) = S_B(i+2) + S_B(i-2)$$
$$\Delta_B(i) = -j\big(S_B(i+2) - S_B(i-2)\big)$$

où l'indice $i$ indique le rang Doppler analysé, S(i) désigne le signal en sortie du ième filtre Doppler. Les indices A et B identifient la première 81 et la seconde 82 séquence FFT.

Il est alors possible de former un opérateur d'écartométrie angulaire en élévation fondé, par exemple, sur l'équation suivante :

$$\varepsilon(i) = \frac{\Sigma_A(i) \bullet \Delta_A(i) + \Sigma_B(i) \bullet \Delta_B(i)}{\Sigma_A^2(i) + \Sigma_B^2(i)}$$

$$(16)$$

Il apparaît que l'opération d'addition au numérateur tend à annuler le biais dû au léger couplage de la distance sur l'angle. La détection de la cible proprement dite peut se faire, par exemple :

- soit par un critère de type « 2/2 » après avoir comparé chaque puissance $\Sigma_A^2(i)$ et $\Sigma_B^2(i)$ par rapport à un seuil de détection ;

- soit en comparant directement la somme des puissances $\Sigma_A^2(i) + \Sigma_B^2(i)$ par rapport à un seuil de détection.

Il est possible d'émettre une forme d'onde sans coloration spatiale. Cette forme d'onde se résume à émettre le même signal sur chacune des moitiés d'antenne. On ne peut former ainsi qu'une seule voie somme Σ. Dans ce cas, la cible ne peut être détectée qu'en vitesse, la mesure angulaire n'est pas possible. Il est toutefois concevable de mettre en oeuvre un traitement de type « Side Lobe Suppression » (SLS), pour éliminer les échos de forte SER reçus par les lobes secondaires, en comparant les signaux reçus sur deux lignes de site adjacentes, dans le même voisinage Doppler.

Avantageusement, la fréquence porteuse moyenne F pour les deux séquences d'un motif est constante, pour que la cible reste dans la même configuration de fluctuation de SER, c'est-à-dire pour obtenir la même SER sur les deux FFT.

Avantageusement également, il est souhaitable d'utiliser de l'agilité de fréquence d'un motif de 100 ms au suivant pour éviter de rester dans une configuration défavorable pour l'addition des points brillants de la cible. En effet, une cible en trajectoire de collision est vue sous angle d'aspect constant, donc aucune décorrélation due au mouvement relatif de la cible n'est à espérer.

Le traitement se fait, après FFC, lobe formé par lobe formé. D'autre part, pour qu'une cible soit intégrée avec le maximum de sensibilité, sa VRR doit avoir varié de moins de 1 m/s pendant les deux séquences soit 100 ms, ce qui est le cas des cibles en trajectoire de collision.

Si on considère 300 filtres Doppler entre 100 et 400 m/s, 12 x 3 faisceaux somme Σ formé, le nombre 12 correspond au nombre de sources 2 du réseau 12 en réception et donc au nombre de faisceaux indépendant qu'on peut former et 3 au nombre de lignes d'élévation couvertes successivement avec une cadence totale de cycle maximale de 1 s, en se référant à l'exemple de réalisation de la figure 2. Le nombre de cellules de résolutions observées par seconde est : 300 x 12 x 3 x 10 = 108.10$^3$.

Si on souhaite une fausse alarme par heure, la probabilité de fausse alarme PFA nécessaire est donc de 2,6.10$^{-9}$ et le seuil de détection est à mettre 12,6 fois la puissance moyenne du bruit, soit un seuil de rapport signal sur bruit S/B de 11 dB).

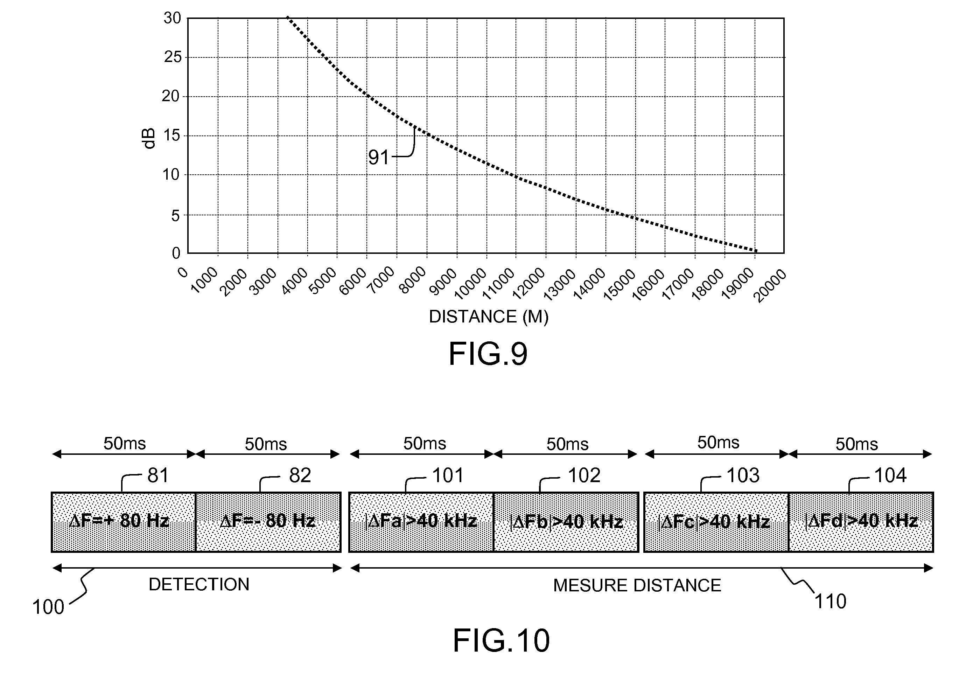

La figure 9 montre, à titre d'exemple, le rapport S/B en fonction de la distance, en sortie d'une FFT de 50 ms, sur une cible fluctuante de 1 m$^2$ selon le modèle SWERLING 1, ce rapport S/B étant représenté par une courbe 91.

Les hypothèses de partage des formes d'onde « cible rapide » et « cible lente » sont par exemple les suivantes :

- pendant 900 ms, on explore 3 lignes avec la forme d'onde « cible rapide », chaque ligne correspondant à la répétition de trois motifs élémentaires de 100 ms, soit 2 FFT ;

- pendant 450 ms, on explore 3 lignes avec la forme d'onde « cible lente ». On a donc trois motifs de détections, pour une ligne donnée, pour un temps total de cycle de 1350 ms. Le temps moyen entre deux motifs de détection élémentaires, de 100 ms, pour une ligne d'élévation donnée est donc :

$$T_{REVISITE} = 1350/3 = 450\,\text{ms}.$$

La probabilité de détection cumulée est calculée avec cette hypothèse de temps moyen.

La figure 10 illustre la forme d'onde en veille, en fin de phase de détection, et en phase d'accrochage en poursuite. La figure illustre une séquence de veille 100 suivie d'une séquence de mesure de distance. Pendant la séquence de veille 100 :

- la porteuse a une fréquence agile d'une séquence de veille à l'autre ;
- la mesure de la VRR de la cible est effectuée sans ambiguïté ;
- la mesure de la direction de la cible ($\psi$, $\theta$) est effectuée sans ambiguïté et sans biais.

Si une cible est détectée à l'issue de cette séquence de veille 100, avantageusement on effectue par exemple les opérations suivantes :

- suppression de l'émission des deux séquences suivantes de veille de 2 x (2x50 ms) = 200 ms ;

- remplacement des deux séquences de veille (200 ms) par quatre séquences 101, 102, 103, 104 de quatre blocs FFT et utilisant des valeurs de ΔF de coloration élevées et supérieures à la bande totale Doppler (soit supérieur à environ 40 kHz) mais toutes différentes.

Ces quatre séquences FFT, chacune de 50 ms environ, chacune utilisant des ΔF élevés et différents se substituent aux deux paires 81, 82 émises en veille avec un ΔF faible, 80 Hz dans l'exemple de la figure 8.

Avantageusement, l'agilité de fréquence est stoppée pendant l'émission de ces quatre séquences FFT de 200 ms au total pour que la cible reste dans la même configuration de fluctuation de SER que lors de sa détection initiale.

La séquence de mesure de distance est donc caractérisée par :

- une porteuse non agile, bloquée à la fréquence de la porteuse de la séquence de veille qui précède ;

- l'émission de quatre séquence de ΔF différents ;

- la mesure d'une « pseudo distance » dans le cas d'une seule détection ;

- la mesure de distance non ambigüe en cas de plusieurs détections.

Avantageusement, la confirmation et la mesure de distance ne sont mises en oeuvre que dans une zone Doppler de quelques filtres et dans le faisceau formé où a eu la détection initiale. En effet, on ne recherche que des cibles en trajectoire de collision, donc : $\dfrac{d\psi}{dt} = 0$ , $\dfrac{d\theta}{dt} = 0$ et $\dfrac{dVRR}{dt} = 0$. Une certaine tolérance sur la valeur nulle doit toutefois être prise en compte car on recherche les cibles en collision, mais aussi celles qui sont en quasi-collision (bulle de sécurité). En azimut, on cherche également à régler le problème de la séparation de trafic. La tolérance sur la valeur nulle dépend de deux termes :

- un terme lié au bruit d'estimation des paramètres angulaires ;

- un terme de parallaxe qui est inversement proportionnel à une puissance de la distance.

En considérant des cibles au-delà de 2 km, ces tolérances sont, hors bruit, données par les relations suivantes donnant la variation de VRR et la variation d'angle :

$$\Delta V_{RR} \approx -\frac{r_{\psi,\theta}^2}{R^3} V_{RR}^2 \qquad \left| \Delta \sin \psi, \theta \right| = \left| \frac{r_{\psi,\theta}}{R^2} V_{RR} \Delta t \right| \qquad (17)$$

$r_{\psi,\theta}$ est la marge de collision ou l'écart de séparation de trafic selon l'axe horizontal ou vertical, soit 500 pieds en évitement de collision ou séparation de trafic vertical et 1500 pieds en séparation de trafic horizontale.

A grande distance, c'est le critère de séparation de trafic horizontale, $r_{\psi}$ = 1500 pieds, qui est prépondérant. A courte distance, c'est plutôt le critère d'évitement de quasi-collision qui est à prendre en compte, $r_{\psi,\theta}$ = 500 pieds.

Comme on ne connaît pas la distance à l'initialisation, on considère arbitrairement 2000 mètres, ce qui est la limite basse du domaine en distance pour le mode « cible rapide ». Dans ces conditions, on constate que la variation de VRR est, au maximum de -0,8 m/s, et la variation d'angle est, au maximum de 8,5 milliradians.

Avantageusement et profitant du fait qu'on ne s'intéresse qu'aux cibles en trajectoires de collision (la condition la plus critique étant relative à la séparation de trafic horizontale), on voit que la détection en mode de confirmation n'a besoin d'être effectuée :

- que sur 3 cases Doppler centrées autour de la case où a eu lieu la détection initiale ;

- que dans un lobe antenne formé après FFC.

Dans ces conditions, on voit qu'un seuil de détection très bas, proche du niveau de bruit, pourrait convenir si on ne s'intéressait qu'à l'aspect « fausse alarme sur confirmation ».

En réalité, en phase de confirmation, un seuil de « détection » est placé, non pour garantir un certain taux de fausse alarme, mais pour que les mesures de phases différentielles validées ne soient pas entachées d'erreurs prohibitives qui pourraient empêcher la levée d'ambiguïté en distance telle qu'expliquée ci-après.

Ce qui concerne le principe général de la mesure de distance, compte tenu :

- de l'ambiguïté de $2\pi$ sur les mesures de phase différentielle, qui équivaut à une ambiguïté distance de l'ordre de 3000 m ;

- du couplage entre l'angle et la distance au niveau de la mesure de phase différentielle ;

quelle que soit la manière dont on s'y prenne, trois mesures de phase différentielles sont nécessaires pour réaliser une mesure de distance non-ambiguë car il faut non seulement lever :

- l'ambiguïté entre l'angle et la distance ;

- mais également l'ambiguïté sur la mesure de phase différentielle modulo $2\pi$.

Ces trois mesures peuvent être, par exemple :

- une mesure non ambiguë d'angle en phase de veille et au moins deux mesures ambiguës en Distance-Angle et phase différentielles en phase dite de « mesure de distance », soit pendant les quatre dernières FFT de 50 ms ;

- au moins trois mesures ambiguës en Distance-Angle et phase différentielles en phase dite de « mesure de distance ».

Lors de la première détection d'une cible, seul le premier cas est utilisé. Une fois la piste ouverte sur une cible, les deux cas peuvent être employés.

A l'issue des quatre séquences de confirmation de 50 ms (au total 200 ms), on peut se trouver dans les situations suivantes :

- Cas N°1 : Aucune re-détection de la cible n'a eu lieu (cas toutefois peu probable, voir plus loin) ;

- Cas N°2 : Une seule re-détection (cas assez peu probable, voir plus loin) ;

- Cas N°3 : Au moins deux re-détections.

Cas N °1 :

On affecte arbitrairement à la cible une distance, par exemple 2000 m qui correspond à la limite basse du domaine. Le vecteur d'état est initialisé comme suit : les valeurs numériques étant données à titre d'exemple et S/B représentant le rapport signal sur bruit :

$$
\begin{pmatrix}
VRR & \text{Distance non ambiguë} = 2000 & \text{S/B a} = 0 \\
ANGLES & \text{Distance ambiguë N°1} = 2000 & \text{S/B b} = 0 \\
\text{Indice de qualité} = 0 & \text{Distance ambiguë N°2} = 2000 & \text{S/B c} = 0 \\
\text{Compteur d'évennements} = 1 & \text{Distance ambiguë N°3} = 2000 & \text{S/B d} = 0
\end{pmatrix}
$$

La piste reste « interne » au radar et n'est pas communiquée au système de navigation.

Si au cours du cycle de balayage de la ligne d'élévation suivant, le même cas se reproduit : c'est à dire :

- soit la cible n'est pas détectée à nouveau (au cours de la phase où le ΔF est faible) ni n'est pas détectée au moins deux fois durant la phase de mesure de distance (au cours de la phase où les |ΔF| sont élevés), ceci à la séquence d'observation suivante de la même ligne d'élévation (soit environ 1 seconde plus tard) ;

- soit une cible est détectée à nouveau (au cours de la phase où le ΔF est faible) mais n'est pas située dans le domaine de corrélation de poursuite « Angle - VRR » ;

- soit la cible est détectée à nouveau (au cours de la phase où le ΔF est faible) et corrèle, mais la séquence de mesure distance est à nouveau infructueuse.

Alors on incrémente de 1 le compteur d'événement. Lorsque le compteur d'événement atteint un certain seuil, la piste est abandonnée. Il est possible, dans un principe de sécurité, de transmettre au système de navigation une pré-alerte.

Cas N°2 :

Ce cas permet une mesure de distance, mais qui est ambiguë (du fait de l'ambiguïté de $2\pi$ sur la phase différentielle). En effet, durant la séquence de détection, l'angle (et la VRR) ont été mesurés sans ambiguïté. L'application de la relation (14') conduit à l'estimation distance suivante :

$$
R = \frac{c}{2.\Delta F} \left[ \frac{2a.\sin\theta}{\lambda} - \frac{\Delta\phi F}{2\pi} \right] \bmod \frac{c}{2.\Delta F} \qquad (17)
$$

Pur une valeur ΔF de 50 kHz, le terme de modulo vaut 3000 m. En admettant que trois ambiguïtés sont contenues dans le domaine distance de la forme d'onde « grande portée », le vecteur d'état est initialisé comme suit :

$$\left(\begin{array}{lll} VRR & \text{Distance non ambiguë} = R & SNR \\[2mm] ANGLES & \text{Distance ambiguë N°1} = R + \dfrac{c}{2.\Delta F} & 0 \\[2mm] \text{Indice de qualité} = 1 & \text{Distance ambiguë N°2} = R + 2\dfrac{c}{2.\Delta F} & 0 \\[2mm] \text{Compteur d'évennements} = 1 & \text{Distance ambiguë N°3} = R + 3\dfrac{c}{2.\Delta F} & 0 \end{array}\right)$$

Le SNR des trois cycles de non-détection est mis à zéro. Dans la pratique, quatre estimateurs sont ouverts, avec les quatre hypothèses de distance. Il est possible, dans un principe de sécurité, de transmettre au système de navigation une pré-alerte relative à la piste correspondant à la plus courte distance, habillée d'un indicateur précisant le risque d'ambiguïté en distance. Si, au cours du cycle de balayage suivant, le même cas se produit, on incrémente le compteur d'événement d'une valeur $\leq 1$. La piste est abandonnée lorsqu'on dépasse un certain seuil.

Cas N°3 :

Ce cas permet une mesure de distance, non ambiguë. Il suffit qu'il y ait 2 détections valides sur 4 et un jeu de $\Delta F$ judicieusement choisi. Les principes possibles de lever d'ambiguïté en distance font l'objet du paragraphe suivant.

Un exemple de levée d'ambiguïté en distance, dans une solution préférentielle en phase d'initialisation de poursuite, est présenté ci-après sur un cas simplifié, en faisant abstraction de l'ambiguïté sur la phase différentielle.

Etant donné la mesure de l'angle de la cible $\theta$ provenant de la séquence de détection, la relation (14') montre que chaque mesure de phase différentielle permet une estimation de distance modulo l'ambiguïté distance.

Si on se limite à la première ambiguïté, on peut écrire, par exemple dans le cas de deux mesures de phase différentielles valide :

$$R_a = \frac{c}{2.\Delta F_a}\left[\frac{a.\sin\theta}{\lambda} - \frac{\Delta\phi F_a}{2\pi}\right]$$

$$R_b = \frac{c}{2.\Delta F_b}\left[\frac{a.\sin\theta}{\lambda} - \frac{\Delta\phi F_b}{2\pi}\right]$$

Avec deux mesures, on peut calculer, par exemple, une estimée filtrée en faisant la moyenne des deux distances *Ra* et *Rb*. Il est aisé de se rendre compte que si on a $\Delta F_b = -\Delta F_a$, une éventuelle erreur de mesure sur l'angle $\theta$ s'élimine.

Avantageusement on voit qu'il y a intérêt à utiliser des valeurs de $\Delta F$ groupées par paires de signes opposés et si possible de valeurs absolues voisines voire égales (dans une paire).

Dans un cas général, comme précédemment, la détection en phase de veille fournit directement une estimation de l'angle $\theta$ déduite de l'écartométrie mono-pulse, par exemple comme indiquée par la relation (16).

Si maintenant on ne se limite plus à la première ambiguïté, on peut procéder de manière similaire en résolvant le système d'équations par un réarrangement de la relation (17).

Avantageusement, à chaque équation on associe un critère de qualité « Q » compris entre une valeur minimale et une valeur maximale. Un critère de valeur minimale correspond à une mesure inutilisable. Une valeur maximale correspond à une très bonne mesure.

Cet indice de qualité « Q » peut être fonction de divers paramètres, par exemple : le rapport S/B, deux mesures faites en utilisant notamment deux $\Delta F$ de signes opposés.

On est donc en présence de cinq mesures potentiellement utilisables :

- une mesure angulaire correspondant à la séquence de veille (100 ms) ;

- quatre mesures, au maximum, et deux, au minimum, correspondant aux quatre FFT de 50 ms de la séquence de confirmation (4 x 50 ms).

La mesure angulaire effectuée pendant la séquence de veille est donnée par la relation suivante :

$$\frac{a.\sin\theta}{\lambda} = f\big(\varepsilon(\Sigma, \Delta)\big) \quad \text{Indice qualité Q0} \qquad (18)$$

La fonction « $f$ » est une fonction de linéarisation de la mesure d'écartométrie, c'est à dire qu'elle permet de fournir l'estimation de l'angle $\theta$ sans biais à partir de la mesure d'écartométrie $\varepsilon$ de la relation (16) qui est une fonction monotone, mais non linéaire, de l'angle $\theta$.

Les quatre mesures correspondant aux quatre FFT de 50 ms 101, 102, 103, 104 de la séquence de confirmation sont données par les quatre relations suivantes :

$$4\pi\left(\frac{a.\sin\theta}{\lambda} - \frac{\Delta F_a}{c}R_0\right) = \Delta\phi F_a + k_a.2\pi \quad \text{Indice qualité Qa}$$

$$4\pi\left(\frac{a.\sin\theta}{\lambda} - \frac{\Delta F_b}{c}R_0\right) = \Delta\phi F_b + k_b.2\pi \quad \text{Indice qualité Qb}$$

$$4\pi\left(\frac{a.\sin\theta}{\lambda} - \frac{\Delta F_c}{c}R_0\right) = \Delta\phi F_c + k_c.2\pi \quad \text{Indice qualité Qc} \qquad (19)$$

$$4\pi\left(\frac{a.\sin\theta}{\lambda} - \frac{\Delta F_d}{c}R_0\right) = \Delta\phi F_d + k_d.2\pi \quad \text{Indice qualité Qd}$$

Avantageusement, on teste les indices de qualité « Qa à Qd » vis à vis d'un seuil et on ne retient que les équations correspondant à un indice supérieur au seuil.

Si aucune équation n'est retenue, on est dans le cas N°1 précédent, si une seule équation est retenue, on est dans le cas N° 2 et si de deux à quatre équations sont retenues on est dans le cas de levée non ambiguë faisable c'est à dire le cas N° 3 . On suppose être dans ce cas pour la suite de l'explication.

A ce niveau, on a un système d'équations ayant pour inconnues : l'angle, la distance et les entiers de modulo.

Avantageusement, on commence par déterminer le jeu d'entiers ($k_a$, ..., $k_d$) correspondant aux modulos de phase. Pour cela, on isole la paire de mesure où les indices de qualité « Q » sont maximaux. A l'issue de la détection en phase de veille, on a eu une mesure de l'angle $\theta$. De chacune des deux équations associées à un indice de qualité maximal, on peut donc en déduire, sans ambiguïté due à l'angle $\theta$, pour chaque équation, trois positions en distance ambiguë, soit un triplet. Il a été supposé précédemment que trois rangs d'ambiguïté seulement étaient traités.

Avantageusement, si x et y sont les numéros des deux équations précédentes, on a deux triplets d'estimées de distance ambiguës : ($Rx_1$, $Rx_2$, $Rx_3$) ($Ry_1$, $Ry_2$, $Ry_3$). Avec ces deux triplets, on peut former neuf paires de distance associant une mesure « x » et une mesure « y ». On détermine la paire où l'écart en distance est minimal.

Avantageusement, on teste cet écart en distance minimal vis à vis d'un seuil de rejet, fonction des indices de qualité. Si cet écart est inférieur au seuil de rejet, la mesure de distance est déclarée valide et on en déduit les entiers de modulo « k » des équations valides.

D'autre part, il est bien évident aux yeux de l'homme du métier, que le jeu de valeur optimal de $\Delta F$ est à déterminer par des techniques d'optimisation. Idéalement, le jeu de valeur de $\Delta F$ doit permettre une levée d'ambiguïté, sans erreur sur le rang, quelle que soit la distance de la cible dans le domaine de distance traité, avec le minimum de rapport S/B ; c'est à dire avec le maximum de bruit sur chaque mesure de phase. On peut aussi prendre en compte la précision de mesure, lorsque le rapport S/B est plus élevé. Selon précisément ce qu'on veut favoriser, une fonction de coût est à définir et le jeu de $\Delta F$ qui minimise cette fonction de coût est déterminée selon des méthodes mathématiques connues.

En posant $X = \dfrac{a.\sin\theta}{\lambda}$ , $\alpha_{a,b,c,d} = -\dfrac{4\pi.\Delta F_{a,b,c,d}}{c}$ et $Z_{a,b,c,d} = \Delta\phi F_{a,b,c,d} + k_{a,b,c,d}.2\pi$ , il est possible de ré-écrire le système des équations (18) et (19) sous la forme globale simplifiée suivante :

$$X + 0.R = Z0 \quad \text{Indice qualité Q0}$$

$$X + \alpha_a.R = Z_a \quad \text{Indice qualité Qa}$$

$$X + \alpha_b.R = Z_b \quad \text{Indice qualité Qb}$$

$$X + \alpha_c.R = Z_c \quad \text{Indice qualité Qc}$$

$$X + \alpha_d.R = Z_d \quad \text{Indice qualité Qd}$$

Soit, sous forme matricielle : *M.X* = *Z* indice de qualité Q , avec :

$$M = \begin{pmatrix} 1 & 0 \\ 1 & \alpha_a \\ 1 & \alpha_b \\ 1 & \alpha_c \\ 1 & \alpha_d \end{pmatrix} \quad X = \begin{pmatrix} X \\ R \end{pmatrix} \quad Z = \begin{pmatrix} Z0 \\ Z_a \\ Z_b \\ Z_c \\ Z_d \end{pmatrix} \quad \text{et} \quad Q = \begin{pmatrix} Q0 \\ Q_a \\ Q_b \\ Q_c \\ Q_d \end{pmatrix}$$

Avantageusement, la résolution de ce système linéaire peut se faire :

- de manière algébrique « classique » s'il n'y a que deux équations valides ;

- au sens des moindres carrés s'il y a strictement plus de deux équations validées. Dans ce cas, le « poids » apporté à chaque mesure « Z » est déduit de l'indice de qualité « Q » . Si tous les poids sont égaux, la meilleure estimée minimise la norme $\|MX - Z\|^2$. Elle est donnée par la relation : $\hat{X}_{MC} = (M^T M)^{-1} M^T Z$. Cette relation matricielle peut se développer facilement car la matrice à inverser ($M^T M$) est de taille 2 x 2.

D'autres méthodes de levée d'ambiguïté en distance sont possibles. Un système de levée d'ambiguïté est notamment décrit dans la demande de brevet français FR 09 000243.
En ce qui concerne la précision sur la levée d'ambiguïté,
**[0170]** Dans le cas où seules deux mesures (x, y) dans la phase de levée d'ambiguïté en distance sont valides (pire cas), si les mesures de phase sont indépendantes et possèdent un même écart-type $\sigma_\phi$, alors les écart-types angulaire et distance sont donnés par :

$$\sigma(\sin\theta) = \frac{\sqrt{\Delta F_x^2 + \Delta F_y^2}}{\left|\Delta F_x - \Delta F_y\right|}\frac{\lambda.\sqrt{2}}{a}\sigma_\phi \qquad \sigma(R) = \frac{c.\sqrt{2}}{4\pi.\left|\Delta F_x - \Delta F_y\right|}\sigma_\phi$$

Là aussi, on constate l'intérêt qu'il y a à utiliser des paires de mesures où les ΔF sont de signes opposés, entraînant une maximalisation du dénominateur des formules ci-dessus.
Si les mesures sont effectuées à un rapport S/B la mesure de phase a une erreur voisine de :

$$\sigma_\phi \cong \frac{1}{\sqrt{2.S/B}}$$

Ainsi, pour un S/B = 10 dB, l'écart type de phase est de 0,22 rd, soit environ 0,036 x 2π. Avec les valeurs numériques des exemples du paragraphe précédent, pour le cas N°1 où ΔFx,y = ±50 kHz, les bruits d'estimation à 1σ sont :

- 110 milliradians sur l'angle, soit un bruit d'altitude « brut » de 110 m à 10 km.

- 75 m sur la distance.

En phase de recherche, où seuls l'angle et la VRR sont mesurables, l'erreur sur l'angle est :

$$\sigma(\sin\theta) = \frac{\lambda.\sqrt{2}}{8\pi.a}\sigma_\phi$$

En phase de poursuite établie, la forme d'onde peut être légèrement modifiée par rapport à la forme présentée à la figure 10. La poursuite établie correspond au cas d'entretien des pistes en cours, hors initialisation des pistes et hors veille seule. La séquence de veille 100 est donc suivie dans ce cas d'une séquence d'entretien des poursuites.

La modification consiste, dans la séquence d'entretien des poursuites, à bloquer la fréquence de la porteuse à une fréquence différente de celle de la porteuse de la séquence de veille qui précède, au lieu de la bloquer à la fréquence de la porteuse de la séquence de veille qui précède.

Dans un souci de simplification, il est cependant possible d'utiliser le même schéma de forme d'onde qu'en phase de confirmation de détection présenté par la figure 10. L'intérêt de la forme d'onde telle que légèrement modifiée comme décrit ci-dessus est notamment que les phases de veille et de poursuites ont lieu sur deux fréquences différentes :

- si le tirage de SER fluctuante de la cible sur la fréquence « Veille » porteuse est trop faible, on peut espérer obtenir un tirage plus favorable sur la fréquence « poursuite » : on peut donc recaler la piste en VRR, distance et angle ;

- dans le cas contraire, on ne peut espérer qu'un recalage de la poursuite en VRR et angle, cela n'est pas trop grave puisqu'on fait l'hypothèse que les cibles menaçantes sont en trajectoire de collision, donc à VRR constante, l'estimation courante de la distance est donc effectuée par intégration de la VRR.

Avantageusement et profitant du fait qu'on ne s'intéresse qu'aux cibles en trajectoires de collision, la condition la plus critique étant relative à la séparation de trafic horizontale, il apparaît que la zone de corrélation des mesures d'une séquence d'observation à la suivante est fonction de la distance de la cible et n'a besoin d'être effectuée :

- Vers 10 km :

  - que sur 3 cases Doppler centrées autour de la case où a eu lieu la détection initiale, pour tenir compte des effets de quantification des filtres Doppler ;

  - que dans un lobe antenne formé après FFC.

- Vers 6 km :

  - que sur 5 cases Doppler autour de la case où a eu lieu la détection initiale, pour tenir compte des effets de quantification des filtres Doppler ;

  - que dans un ou deux lobes antenne formés après FFC.

- Vers 2 km :

  - que sur une quinzaine, environ, de cases Doppler autour de la case où a eu lieu la détection initiale ;

  - que sur deux lobes antenne formés après FFC.

Avantageusement, les fenêtres de corrélation en angle et VRR, en particulier en VRR, ne sont pas centrées autour du point prévu car le critère d'évitement de collision permet de prédire le sens de l'évolution, en particulier, si on n'est pas en cas de collision exacte, la VRR ne peut que baisser.

En ce qui concerne le recalage des estimations de distance, de VRR et d'angle en cas de nouvelle mesure, à l'issue d'une séquence d'observation en poursuite (durant au total 300 ms), on peut se trouver dans les situations suivantes :

Cas N°1 : Aucune détection de la cible dans le domaine de corrélation ;

Cas N°2 : Une détection de la cible dans le domaine de corrélation :

Dans la phase de la séquence d'observation dédiée à la veille, on a des mesures non ambiguës de l'angle et de la VRR.

Cas N°3 : Une seule détection de la cible dans le domaine de corrélation :

Dans la phase de la séquence d'observation dédiée à la mesure distance, On n'a qu'une mesure ambiguë entre l'angle et la distance.

Cas N °4 : Deux détections de la cible dans le domaine de corrélation :

- Une détection de la cible dans la phase de la séquence d'observation dédiée à la veille ;

- Et une autre dans la séquence d'observation dédiée à la mesure distance :

On a des mesures non ambiguës de l'angle et de la VRR et une mesure ambiguë (à 3000 m près environ) de la distance.

Cas N °5 : Deux détections de la cible dans le domaine de corrélation :

Dans la phase de la séquence d'observation dédiée à la mesure distance, Si on fait l'hypothèse du rang d'ambiguïté sur la distance, on peut lever l'ambiguïté entre l'angle et la distance.

Cas N °6 : : Au moins trois détection de la cible dans le domaine de corrélation :

Quelles que soient leurs positions dans la séquence d'observation, on a des mesures non ambiguës de l'angle, de la VRR et de la distance.

Une stratégie de recalage de poursuite peut être la suivante :

- Dans les cas N° 1 et N° 3, on ne recale pas les estimées. L'indice de qualité du vecteur d'état est abaissé d'une certaine valeur liée à ces deux cas et le compteur d'événement est incrémenté de 1.

- Dans le cas N° 2, on recale uniquement les estimées de VRR et d'angles par les nouvelles mesures. L'indice de qualité du vecteur d'état est abaissé d'une certaine valeur liée à ce cas et le compteur d'événement est inchangé.

- Dans tous les autres cas, on recale les estimées de VRR, d'angles et de distance (en effet, l'erreur de prédiction est nettement inférieure à la distance entre deux ambiguïtés de distance : le rang d'ambiguïté de la nouvelle mesure peut donc être déterminé sans erreur. L'indice de qualité du vecteur d'état est modifié d'une certaine valeur liée au cas rencontré et le compteur d'événement est remis à zéro.

Comme évoqué précédemment, lorsque le compteur d'événement dépasse un certain seuil (absence prolongée de recalage de poursuite), la piste est abandonnée.

La méthode de recalage / filtrage des mesures / estimation peut être n'importe quelle méthode connue : filtres de Kalman, filtres non adaptatifs à coefficient de gain déterministes, filtres dit «$\alpha$, $\beta$» par exemple.

La publication vers le système de navigation et/ou l'abandon éventuel de certaines pistes sont fondé sur des tests sur :

- L'indice de qualité de piste ;

- Le compteur d'événement.

Plusieurs critères peuvent être employés, selon les besoins « système » ou selon les ressources de calcul disponibles.

Après la description relative à la première forme d'onde, on considère maintenant la deuxième forme d'onde. Cette deuxième forme d'onde est de type BFR Doppler, BFR signifiant basse fréquence de récurrence. Elle couvre la zone endo-fouillis donc s'intéresse aux cibles dont la vitesse radiale relative VRR est inférieure à la vitesse $Vp$ du porteur, par exemple $Vp$ = 100 m/s. Cette deuxième forme d'onde est limitée en domaine instrumental, par exemple à 2000 mètres en distance. Cette distance correspond, comme dans le cas d'une cible rapide, à 20 secondes de préavis.

La première forme d'onde ayant une portée minimale de 9200 mètres dans les exemples numériques précédents, la deuxième forme d'onde n'a pas besoin d'être aussi sensible que la première. Le rapport des distances, 9200/2000, conduit à une différence de sensibilité de 26,5 dB, ce qui est important.

En considérant des gains d'antenne identique, avec un temps d'observation divisé par deux par rapport à la première forme d'onde, la puissance d'émission moyenne peut être réduite de l'ordre de 200 fois.

En revanche, cette forme d'onde doit présenter les caractéristiques suivantes :

- être non ambiguë en vitesse sur cible <u>et</u> sur fouillis de sol, soit sur un domaine supérieur à $\pm 100$ m/s (soit une bande de 13,2 kHz en bande X) ;

- être non ambiguë en distance sur cible, mais aussi sur fouillis de sol pour maximaliser le rapport « Cible/Fouillis » ;

- avoir une distance courte aveugle inférieure à 500 m (en dessous de cette distance on considère que la manoeuvre d'évitement est infaisable) ;

- avoir une très bonne résolution en distance pour maximaliser le rapport « Cible/Fouillis ».

Le principe radar associé à cette deuxième forme d'onde est le même que celui utilisé pour la première forme d'onde. En particulier le système de coloration de l'espace à l'émission et la FFC à la réception sont conservés. Il est simplement nécessaire d'utiliser un dispositif de découpe des impulsions qui est inutile dans le cas de forme d'ondes continues.

En ce qui concerne les motifs élémentaires de cette deuxième forme d'onde, il faut considérer :

- le choix de la résolution en distance ;
- le choix de la résolution Doppler ;
- le choix de la fréquence de récurrence ;
- le choix des codes de coloration de l'espace.

En ce qui concerne la résolution en distance, il est intéressant de réduire la dimension d'une case distance pour réduire la surface de fouillis de sol et par conséquent sa gêne. Cependant, pour une VRR maximale de 100 m/s et un temps de traitement Doppler de l'ordre de 50 ms (comme pour la 1$^{ère}$ forme d'onde), la migration en distance durant le temps de traitement Doppler est de 5 mètres. En considérant une petite cible de 5 à 10 mètre de long, on constate qu'une résolution en distance de 10 à 15 mètres permet de respecter le critère d'absence de migration en distance. On fixe par conséquent la résolution en distance à 15 mètres par exemple, ce qui correspond à une bande émise de 10 MHz et une résolution temporelle de 100 ns.

En ce qui concerne le choix de la résolution Doppler, on utilise par exemple le même motif élémentaire que pour la première forme d'onde, c'est-à-dire des durées cohérentes voisines de 50 millisecondes groupées par paires de durée de 100 millisecondes.

Pour le choix de la fréquence de récurrence FR, la condition sur la non-ambiguïté Doppler de la forme d'onde impose que FR > 13,2 kHz ou PRI < 75 $\mu$s, PRI étant la période de récurrence. La condition d'absence d'ambiguïté en distance sur cible se traduit par PRI > 13,3 $\mu$s. L'intervalle possible de PRI est donc [13,3 ; 75 $\mu$s].

En ce qui concerne le choix des codes de coloration de l'espace, la condition d'orthogonalité peut être atteinte par exemple par utilisation :

- de porteuses F1 et F2 distinctes ;

- de codes non sensibles au couplage distance-Doppler.

Pour l'orthogonalité par utilisation de fréquences porteuses à F1 et F2 distinctes, s'agit dans ce cas de la transposition du principe utilisé pour la première forme d'onde « cibles rapides ». Si on recherche l'orthogonalité au niveau de l'impulsion de durée $\tau$ (en supposant qu'il n'y a pas de compression d'impulsion et que l'impulsion est parfaitement rectangulaire), l'écart entre porteuses F1 et F2 doit vérifier : $\Delta F = k/\tau$, avec k entier non nul.

Si on transpose les équations établies pour la 1$^{ère}$ forme d'onde au cas présent, notamment de l'équation (12') et de l'équation (14'), on constate un phénomène de couplage Angle-Distance sur la phase du signal reçu bien plus marqué que pour la première forme d'onde. Ce phénomène est sensible sur une distance inférieure à la résolution distance.

Si les cibles étaient parfaitement ponctuelles à l'échelle de la résolution distance, soit 15 m, le problème se résoudrait comme dans le cas de la première forme d'onde.

En réalité, cette hypothèse n'est, en général, pas vérifiée sur des cibles réelles où on trouve une pluralité de points brillants d'importances voisines (c'est par ailleurs l'hypothèse du mode de fluctuation connu de l'homme du métier sous le vocable « SWERLING 1 ») : on est donc confronté à donc une pluralité de modes de couplage, qui induisent des effets de scintillation inacceptables.

Si on veut pouvoir transposer le principe utilisé pour la 1ère forme d'onde, il faut donc se replacer dans une configuration où $\Delta F \ll 1/\tau$. Dans ce cas, on ne cherche plus l'orthogonalité au niveau de l'impulsion, mais au niveau du train d'impulsions Doppler.

Cette solution reprend le principe utilisé pour la première forme d'onde, notamment le cas décrit à la figure 6b. Dans le cas présent, comme on ne s'intéresse qu'à des cibles endo-fouillis, la séparation à la réception des signaux de cibles et de fouillis correspondant à chacun des codes orthogonaux émis est certaine si l'écart $\Delta F = |F1 - F2|$ est supérieur ou égal à 13,2 kHz (bande Doppler maximale du fouillis de sol pour un porteur à 100 m/s, soit un étalement du fouillis sur une bande équivalente à 2Vp = 200 m/s).

A la réception, on sera donc confronté à un signal dont la bande Doppler « apparente » est de $2\dfrac{2.Vp}{\lambda} + \left|\Delta F\right|$.

La fréquence de récurrence doit donc être désormais dimensionnée pour que ce domaine en fréquence soit sans ambiguïté. La plage de fréquence de récurrence est donc maintenant réduite à FR $\in$ [26,4 ; 75 kHz]. L'intervalle possible de période de répétition PRI est de [13,3 $\mu$s ; 37,5 $\mu$s].

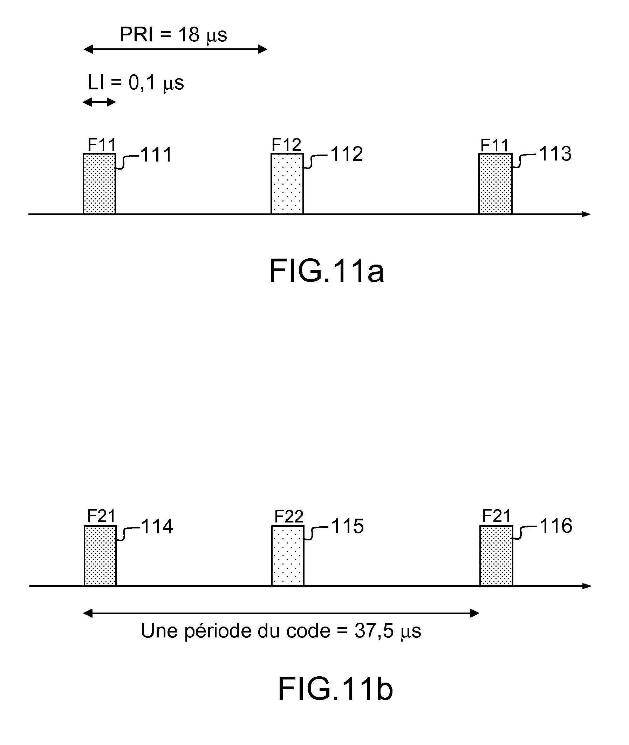

Un exemple de forme d'onde très simple qui satisfait tous ces critères est illustré par les figures 11a et 11b, la figure 11a présentant la forme d'onde pour le premier sous-réseau d'émission 23 et la figure 11b présentant la forme d'onde pour le deuxième sous-réseau d'émission 24. A titre d'exemple la fréquence de répétition est de 18 $\mu$s et la largeur des impulsions est de 0,1 $\mu$s.

La forme d'onde de la figure 11a, la fréquence de la première impulsion représentée 111 est à la fréquence $F_{11}$, la deuxième impulsion 112 est à la fréquence $F_{12}$, puis un nouveau cycle recommence avec une impulsion 113 à $F_{11}$ et une impulsion à $F_{12}$ non représentée.

Dans la forme d'onde de la figure 11 b, la fréquence de la première impulsion représentée 114 est à la fréquence $F_{21}$, la deuxième impulsion 115 est à la fréquence $F_{22}$, puis un nouveau cycle, ou motif élémentaire, recommence avec une impulsion 116 à $F_{21}$ et une impulsion à $F_{22}$ non représentée. Les impulsions des deux formes d'ondes sont synchrones, ainsi l'impulsion 111 à $F_{11}$ émise par le premier sous-réseau 23 est synchrone de l'impulsion 114 à $F_{21}$ émise par le deuxième sous-réseau 24.

Les fréquences sont, par exemple, choisies de la manière suivante :

$$F_{11} = F_X + \Delta F / 2 \quad F_{12} = F_Y + \Delta F / 2$$

$$F_{21} = F_X - \Delta F / 2 \quad F_{22} = F_Y - \Delta F / 2$$

L'insertion des impulsions aux fréquences $F_{12}$ et $F_{22}$ autour de $F_X$ et $F_Y$ est destinée à obtenir un gain de post-intégration. En effet, on utilise des impulsions courtes et très simples mais on profite de la plage possible de PRI de [13,3 ; 37,5 $\mu$s] qui est assez vaste pour gagner en sensibilité en insérant une seconde trame d'impulsions.

Des échos de n$^{\text{ième}}$ trace sont possibles (fortes SER). Pour éviter cette gêne, avantageusement, on fera varier légèrement la PRI de bloc de paires de FFT à blocs de paires de FFT (soit de 100 ms en 100 ms). On ne fait pas à proprement parler de levée d'ambiguïté, mais un écho ambigu n'aura pas un mouvement apparent cohérent de celui d'une cible en trajectoire de collision. De ce fait une poursuite ne peut être établie.

Avantageusement, les fréquences centrales Fx et Fy seront choisies de manière à ce que toutes les fréquences distinctes parmi le jeu de 4 fréquences précédentes correspondent à des impulsions orthogonales. Si *Fy > Fx et $\Delta F$ > 0*, ceci revient à obtenir l'orthogonalité sur les signaux à $F_x + \Delta F/2$ et $F_Y - \Delta F/2$ ; ceci dans le but de limiter les phénomènes de repliement en distance des échos ambigus.

Il est à noter que fréquences ci-dessus ne correspondent, ni obligatoirement à un espacement régulier, ni obligatoirement à une progression croissante ou décroissante.

Cette solution présente les avantages suivants :

- les impulsions sont les plus simples possible ;

- le domaine distance cible est > 2000 m

- le domaine Doppler sur fouillis de sol est correct ;

- le maximum de puissance est émis avec le minimum de complexité.

Une autre solution reprend également le principe utilisé pour la première forme d'onde mais dans le cas de la figure 6a. Cette solution est très voisine de la solution précédente, mais l'écart de fréquence est très faible. Sur un train d'impulsions d'une durée de l'ordre de 50 ms (résolution 20 Hz), on peut, par exemple prendre ΔF = 80 Hz. Dans ce cas, chaque cycle comporte par exemple quatre fréquences au lieu de deux comme dans le cas de la solution précédente illustrées par les figures 11a et 11b. Ainsi, un cycle émis par la le premier sous-réseau d'émission 23 comporte par exemple quatre impulsions successives respectivement à $F_{11}$, $F_{12}$, $F_{13}$, $F_{14}$. De même, un cycle émis par le deuxième sous-réseau 24 comporte par exemple quatre impulsions successives respectivement à $F_{21}$, $F_{22}$, $F_{23}$, $F_{24}$.

Les fréquences sont, par exemple, choisies de la manière suivante :

$$F_{11} = F_X + \Delta F / 2 \quad F_{12} = F_Y + \Delta F / 2$$

$$F_{21} = F_X - \Delta F / 2 \quad F_{22} = F_Y - \Delta F / 2$$

$$F_{13} = F_X - \Delta F / 2 \quad F_{14} = F_Y - \Delta F / 2$$

$$F_{23} = F_X + \Delta F / 2 \quad F_{24} = F_Y + \Delta F / 2$$

Une autre solution possible consiste à émettre séquentiellement le signal sur les deux sous-réseaux 23, 24 du réseau d'émission 11, 111, 112,113. L'écart entre l'émission de l'impulsion émise à la fréquence F1 sur le premier sous-réseau 23 et l'émission de l'impulsion à la fréquence F2 sur le deuxième sous-réseau 24 doit être suffisant pour permettre la couverture en distance recherchée, 2000 mètres par exemple. Cette solution induit un couplage qui est cette fois-ci entre le Doppler et l'angle (distance). La période de répétition du code doit être telle que la bande Doppler des échos que l'on a à traiter ne soit pas ambiguë.

En ce qui concerne l'orthogonalité par utilisation de codes non sensibles au couplage Distance-Doppler on cherche cette orthogonalité au niveau des impulsions, contrairement aux solutions précédentes.

Les formes d'ondes répondant à ce critère sont constituées de la même porteuse, mais modulée par deux codes orthogonaux *C1(t)* et *C2(t)* (pour deux formes d'onde) :

$$SE_1(t) = C_1(t).\exp(2\pi.j.F.t)$$

$$SE_2(t) = C_2(t).\exp(2\pi.j.F.t)$$

Pour que ces codes vérifient la propriété recherchée, si $YC_1(t)$ et $YC_2(t)$ sont les fonctions d'auto-corrélation de ces codes (supposées maximales et égales à 1 pour t = 0), on doit vérifier :

Condition d'orthogonalité : $Y(t) = \left| \int_{-\infty}^{\infty} C_1(\tau).\overline{C_2(\tau - t)}d\tau \right| \ll 1 \quad \forall t \; ;$

Auto-corrélation en amplitude :

$$YC_{1,2}(t) = \left| \int_{-\infty}^{\infty} C_{1,2}(\tau).\overline{C_{1,2}(\tau - t)}d\tau \right| \begin{cases} \approx 1 & \forall t \in [-\delta t/2; +\delta t/2] \\ \ll 1 & \forall t \notin [-\delta t/2; +\delta t/2] \end{cases} ;$$

Phase différentielles entre fonctions d'auto-corrélation :

$$\arg\big(YC_1(t);YC_2(t)\big)=cste\ \forall t\in\big[-\delta t/2;+\delta t/2\big].$$

La première condition assure la séparation de voies, la deuxième permet d'obtenir une réponse impulsionelle en distance satisfaisante et la troisième permet de s'affranchir du couplage Distance-Angle.

Parmi les codes susceptibles de satisfaire ces critères, on peut notamment citer les codes (PN) « Pseudo-Noise », par exemple les codes de Gold, de Barker de Kasami notamment.

Dans un autre type de solution possible, les deux codes orthogonaux sont constitués d'un code de Barker et du même code de Barker retourné dans le temps. Un intérêt subsidiaire lié à l'utilisation de tels codes est qu'ils peuvent servir également de codes de compression d'impulsion.

Toutes les valeurs numériques données au cours de la description sont données à titre d'exemple pour éclairer la description des différentes solutions.

## Revendications

1. Dispositif radar aéroporté ayant une couverture angulaire donnée en élévation et en azimut comportant un système d'émission (21), un système de réception (22) et des moyens de traitement effectuant des mesures de détection et de localisation de cibles, ledit système d'émission comportant :

   - une antenne d'émission composée de P réseaux linéaires (111, 112, 113) d'éléments rayonnant (2) focalisant un faisceau d'émission, lesdits réseaux étant parallèles entre eux ;
   - au moins deux générateurs de forme d'onde (25, 26) ;
   - des moyens d'amplification des signaux d'émission produits par le ou les générateurs de forme d'onde (25,26) ;
   - des moyens de commande des signaux d'émission produits par le ou les générateurs de forme d'onde (25, 26), lesdits moyens alimentant chaque éléments rayonnants (2) par un signal d'émission ;

   les éléments rayonnant étant commandés pour produire simultanément un balayage électronique du faisceau d'émission en élévation et une émission colorée en élévation, le premier générateur de forme d'onde (25) fournissant un signal à une première fréquence F1 et le deuxième générateur de forme d'onde (26) fournissant un signal à une deuxième fréquence F2, chaque réseau d'émission (111, 112, 113) étant séparé en deux sous-réseaux (23, 24), les éléments rayonnant (2) du premier sous-réseau (23) étant alimentés par le signal à la première fréquence F1 et les éléments rayonnant (2) du deuxième sous-réseau (24) étant alimentés par le signal à la deuxième fréquence F2, l'émission colorée étant obtenue en émettant sur le premier sous-réseau (23) à la première fréquence F1 et en émettant sur le deuxième sous-réseau (24) à la deuxième fréquence F2, ce dispositif radar étant **caractérisé en ce que**
   le système de réception (22) comporte un réseau linéaire (12) d'éléments rayonnant orienté selon une direction orthogonale par rapport aux réseaux linéaires (11, 111, 112, 113) du système d'émission, les moyens de traitement (14) du système de réception (22) effectuant, dans le plan d'élévation, le calcul d'une voie somme ($\Sigma$) et d'une voie différence ($\Delta$) selon la technique monopulse à partir des signaux reçus d'une part à la première fréquence F1 et d'autre part à la deuxième fréquence F2.

2. Dispositif radar selon la revendication 1, **caractérisé en ce que** les moyens de commande :

   - commandent les signaux d'émission de façon à ce que chaque réseau linéaire produise un faisceau d'émission selon une direction propre, l'ensemble des faisceaux d'émission produits étant décalés angulairement en élévation ;
   - comportent des commutateurs (27, 28) pour commuter les signaux d'émission successivement vers chacun des P réseaux linéaires (111, 112, 113) ;

   le balayage électronique à l'émission étant obtenu en commutant l'alimentation en signaux des P réseaux dont les faisceaux d'émission sont orientés dans P directions distinctes.

3. Dispositif selon l'une quelconque des revendications précédentes, **caractérisé en ce que** le système de réception (22) comporte des moyens de traitement (14) produisant un faisceau de réception par formation de faisceau par le calcul (73) en azimut.

**4.** Dispositif radar selon l'une quelconque des revendications précédentes, **caractérisé en ce qu'**il effectue la détection et la localisation d'une cible (I, 51) en au moins deux étapes :

- dans une première étape le radar détecte une éventuelle cible avec une sensibilité de détection maximum et mesure au moins la vitesse de rapprochement de la cible vers le radar ;
- dans une deuxième étape, en cas de détection d'une cible, le radar effectue la mesure de la direction ($\psi$) et de la distance (R) de la cible

**5.** Dispositif radar selon l'une quelconque des revendications précédentes, **caractérisé en ce que** la détection d'une cible utilise une analyse spectrale à très haute résolution suivie d'une intégration non cohérente de longue durée, ces deux caractéristiques étant adaptées à des cibles en trajectoire de collision.

**6.** Dispositif radar selon l'une quelconque des revendications précédentes, **caractérisé en ce qu'**il utilise deux formes d'onde, un générateur d'onde (25, 26) fournissant deux formes d'ondes, une première forme d'onde (81, 82, 101, 102, 103, 104) étant adaptée aux cibles rapides et localisées en fréquence Doppler ou en mesure de distance sur bruit thermique, la deuxième forme d'onde à portée réduite étant adaptée aux cibles lentes détectables sur fond de fouillis de sol.

**7.** Dispositif radar selon la revendication 6, **caractérisé en ce que** l'émission colorée de la première forme d'onde est composée de l'émission d'au moins deux ondes continues (65, 66) aux fréquences F1 et F2 décalées en fréquence de k/T où T est le temps d'intégration Doppler et k un entier relatif non nul.

**8.** Dispositif radar selon la revendication 7, **caractérisé en ce que** l'ambiguïté en mesures d'angle et distance résultant de l'emploi de la première forme d'onde à coloration d'émission est levée en émettant des ondes sinusoïdales espacées d'une pluralité d'écarts de fréquence.

**9.** Dispositif radar selon l'une quelconque des revendications 6 à 8, **caractérisé en ce qu'**il utilise, pour la première forme d'onde, des écarts de fréquence ($\Delta F$) entre réseaux d'émission de signes opposés.

**10.** Dispositif radar selon la revendication 9, **caractérisé en ce que** la levée d'ambiguïté en mesures d'angle et en mesures de distance, pour la première forme d'onde, s'effectue d'abord en levant le rang d'ambiguïté sur la mesure de distance par l'utilisation de la pluralité d'écarts de fréquence.

**11.** Dispositif radar selon l'une quelconque des revendications 6 à 10, **caractérisé en ce que** la deuxième forme d'onde (111, 112, 113, 114, 115, 116) est une onde sinusoïdale pulsée.

**12.** Dispositif radar selon la revendication 11, **caractérisé en ce que** l'émission colorée de la deuxième forme d'onde est composée de l'émission d'au moins deux ondes sinusoïdales pulsées de fréquences porteuses F1 et F2 décalées en fréquence de k/T où T est le temps d'intégration Doppler et k un nombre entier relatif non nul.

**13.** Dispositif radar selon la revendication 11, **caractérisé en ce que** l'émission colorée de la deuxième forme d'onde est composée de l'émission d'au moins deux ondes sinusoïdales pulsées de porteuses décalées en fréquence de FR/q où FR est la fréquence de répétition des impulsions et q un entier positif non nul.

**14.** Dispositif radar selon la revendication 11, **caractérisé en ce que** l'émission colorée de la deuxième forme d'onde est composée de l'émission d'au moins deux ondes sinusoïdales pulsées de porteuses décalées en fréquence de deux fois l'étalement en fréquence Doppler du fouillis de sol.

**15.** Dispositif radar selon la revendication 11, **caractérisé en ce que** l'émission colorée de la deuxième forme d'onde est composée de l'émission d'au moins deux ondes sinusoïdales pulsées de porteuses décalées en fréquence de deux fois la fréquence Doppler maximale du sol dans l'axe de l'aéronef porteur dudit dispositif radar.

**16.** Dispositif radar selon la revendication 11, **caractérisé en ce que** les signaux en réception étant transposés dans le domaine fréquentiel par une transformée de Fourier rapide FFT, l'émission colorée de la deuxième forme d'onde utilise l'émission d'au moins deux ondes sinusoïdales pulsées de porteuses décalées en fréquence d'un écart $\Delta F$, le signe de cet écart étant permuté d'une séquence de transformée de Fourier FFT rapide à la suivante.

**17.** Dispositif radar selon la revendication 11, **caractérisé en ce que** les signaux en réception étant transposés dans le domaine fréquentiel par une transformée de Fourier rapide FFT, l'émission colorée de la deuxième forme d'onde utilise l'émission d'au moins deux ondes sinusoïdales pulsées de porteuses décalées en fréquence d'un écart ΔF, la valeur absolue de cet écart étant commuté de N séquences de FFT à N séquences FFT.

18. Dispositif radar selon la revendication 11, **caractérisé en ce que** l'émission colorée de la deuxième forme d'onde est composée de l'émission d'au moins deux ondes sinusoïdales pulsées modulées par des codes de phases orthogonaux.

19. Dispositif radar selon la revendication 11, **caractérisé en ce que** l'émission colorée de la deuxième forme d'onde est composée de l'émission d'au moins deux ondes sinusoïdales pulsées modulées par des codes de Barker identiques mais inversés dans le temps.

**Patentansprüche**

1. Luftfahrzeug-Radarvorrichtung mit einem gegebenen Erfassungswinkel in Elevation und Azimut, umfassend ein Sendesystem (21), ein Empfangssystem (22) und Verarbeitungsmittel, die Messungen zum Erkennen und Orten von Zielen durchführen, wobei das Sendesystem Folgendes umfasst:

   - eine Sendeantenne bestehend aus P linearen Gruppen (111, 112, 113) von Strahlungselementen (2), die einen Sendestrahl fokussieren, wobei die Gruppen parallel zueinander sind;
   - wenigstens zwei Wellenfoimgeneratoren (25, 26);
   - Mittel zum Verstärken der von dem oder den Wellenformgenerator(en) (25, 26) erzeugten Sendesignale;
   - Mittel zum Steuern der von dem oder den Wellenformgenerator(en) (25, 26) erzeugten Sendesignale, wobei die Mittel jedes der Strahlungselemente (2) mit einem Sendestrahl versorgen;

   wobei die Strahlungselemente gesteuert werden zum:

   gleichzeitigen Erzeugen einer elektronischen Ablenkung des Sendestrahls in der Elevation und einer farbigen Sendung in der Elevation, wobei der erste Wellenformgenerator (25) ein Signal mit einer ersten Frequenz F1 liefert und der zweite Wellenformgenerator (26) ein Signal mit einer zweiten Frequenz F2 liefert, wobei jede Sendegruppe (111, 112, 113) in zwei Untergruppen (23, 24) unterteilt ist, wobei die Strahlungselemente (2) der ersten Untergruppe (23) mit dem Signal auf der ersten Frequenz F1 gespeist werden und die Strahlungselemente (2) der zweiten Untergruppe (24) mit dem Signal auf der zweiten Frequenz F2 gespeist werden, wobei die farbige Sendung durch Senden auf der ersten Untergruppe (23) mit der ersten Frequenz F1 und durch Senden auf der zweiten Untergruppe (24) mit der zweiten Frequenz F2 erhalten wird, wobei diese Radarvorrichtung **dadurch gekennzeichnet ist, dass**:

   das Empfangssystem (22) eine lineare Gruppe (12) von Strahlungselementen umfasst, die in einer orthogonalen Richtung mit Bezug auf die linearen Gruppen (11, 111, 112, 113) des Sendesystems orientiert ist, wobei die Verarbeitungsmittel (14) des Empfangs systems (22), in der Elevationsebene, eine Berechnung eines Summenkanals ($\Sigma$) und eines Differenzkanals ($\Delta$) gemäß der Monopuls-Technik auf der Basis der Signale durchführen, die einerseits auf der ersten Frequenz F1 und andererseits auf der zweiten Frequenz F2 empfangen werden.

2. Radarvorrichtung nach Anspruch 1, **dadurch gekennzeichnet, dass** die Steuermittel:

   - die Sendesignale so steuern, dass jede lineare Gruppe einen Sendestrahl in einer eigenen Richtung erzeugt, wobei der Satz von erzeugten Sendestrahlen in der Elevation winkelmäßig versetzt ist;
   - Schalter (27, 28) zum Umschalten der Sendesignale nacheinander zu jeder der P linearen Gruppen (111, 112, 113) umfassen;

   wobei die elektronische Ablenkung bei Sendung durch Umschalten der Versorgung mit Signalen von P Gruppen erhalten wird, deren Sendestrahlen in P getrennten Richtungen orientiert sind.

3. Radarvorrichtung nach einem der vorherigen Ansprüche, **dadurch gekennzeichnet, dass** das Empfangssystem (22) Verarbeitungsmittel (14) umfasst, die einen Empfangsstrahl durch Strahlbildung durch Berechnung (73) in Azimut erzeugen.

4. Radarvorrichtung nach einem der vorherigen Ansprüche, **dadurch gekennzeichnet, dass** sie die Erkennung und Ortung eines Ziels (I, 51) in wenigstens zwei Schritten bewirkt:

- in einem ersten Schritt erkennt das Radar ein eventuelles Ziel mit einer maximalen Erkennungsempfindlichkeit und misst mindestens die Annäherungsgeschwindigkeit des Ziels an das Radar;
- in einem zweiten Schritt führt das Radar, falls ein Ziel erkannt wird, eine Messung der Richtung ($\Psi$) und des Abstands (R) des Ziels durch.

5. Radarvorrichtung nach einem der vorherigen Ansprüche, **dadurch gekennzeichnet, dass** die Erkennung eines Ziels eine Spektralanalyse mit sehr hoher Auflösung, gefolgt von einer nicht-kohärenten Integration langer Dauer nutzt, wobei diese beiden Charakteristiken an Ziele auf Kollisionskurs angepasst sind.

6. Radarvorrichtung nach einem der vorherigen Ansprüche, **dadurch gekennzeichnet, dass** sie zwei Wellenformen benutzt, wobei ein Wellengenerator (25, 26) zwei Wellenformen liefert, wobei eine erste Wellenform (81, 82, 101, 102, 103, 104) an die schnellen Ziele angepasst ist, die in Doppler-Frequenz oder Abstand von thermischem Rauschen geortet werden, wobei die zweite Wellenform mit reduzierter Reichweite an die langsamen Ziele angepasst ist, die am Grund von Bodenecho erkennbar sind.

7. Radarvorrichtung nach Anspruch 6, **dadurch gekennzeichnet, dass** sich die farbige Sendung der ersten Wellenform aus der Sendung von wenigstens zwei kontinuierlichen Wellen (65, 66) auf den Frequenzen F1 und F2 zusammensetzt, um k/T frequenzverschoben, wobei T die Doppler-Integrationszeit ist und k eine relative ganze Zahl von ungleich null ist.

8. Radarvorrichtung nach Anspruch 7, **dadurch gekennzeichnet, dass** die Ambiguität von Winkel- und Abstandsmesswerten, die sich aus der Verwendung der ersten Wellenform mit Sendungsfärbung ergibt, aufgehoben wird, indem sinusförmige Wellen gesendet werden, die um mehrere Frequenzabweichungen voneinander beabstandet sind.

9. Radarvorrichtung nach einem der Ansprüche 6 bis 8, **dadurch gekennzeichnet, dass** für die erste Wellenform Frequenzabweichungen ($\Delta$F) zwischen Sendegruppen von entgegengesetzten Vorzeichen benutzt werden.

10. Radarvorrichtung nach Anspruch 9, **dadurch gekennzeichnet, dass** die Aufhebung von Ambiguität der Winkel- und Abstandsmesswerte für die erste Wellenform zunächst unter Aufhebung des Ambiguitätsrangs an dem Abstandsmesswert mittels der mehreren Frequenzabweichungen erfolgt.

11. Radarvorrichtung nach einem der Ansprüche 6 bis 10, **dadurch gekennzeichnet, dass** die zweite Wellenform (111, 112, 113, 114, 115, 116) eine pulsierte sinusförmige Welle ist.

12. Radarvorrichtung nach Anspruch 11, **dadurch gekennzeichnet, dass** sich die farbige Sendung der zweiten Wellenform aus der Sendung von wenigstens zwei pulsierten sinusförmigen Wellen mit Trägerfrequenz F1 und F2 zusammensetzt, um k/T frequenzverschoben, wobei T die Doppler-Integrationszeit ist und k eine relative ganze Zahl von ungleich null ist.

13. Radarvorrichtung nach Anspruch 11, **dadurch gekennzeichnet, dass** sich die farbige Sendung der zweiten Wellenform aus der Sendung von wenigstens zwei pulsierten sinusförmigen Trägerwellen zusammensetzt, um FR/q frequenzverschoben, wobei FR die Wiederholfrequenz von Impulsen ist und q eine positive ganze Zahl von ungleich null ist.

14. Radarvorrichtung nach Anspruch 11, **dadurch gekennzeichnet, dass** sich die farbige Sendung der zweiten Wellenform aus der Sendung von wenigstens zwei pulsierten sinusförmigen Trägerwellen zusammensetzt, frequenzverschoben um die zweifache Abweichung der Doppler-Frequenz des Bodenechos.

15. Radarvorrichtung nach Anspruch 11, **dadurch gekennzeichnet, dass** sich die farbige Sendung der zweiten Wellenform aus der Sendung von wenigstens zwei pulsierten sinusförmigen Trägerwellen zusammensetzt, frequenzverschoben um das Zweifache der maximalen Doppler-Frequenz des Bodens in der Trägerluftfahrzeugachse der Radarvorrichtung.

16. Radarvorrichtung nach Anspruch 11, **dadurch gekennzeichnet, dass**, da die Empfangs signale in der Frequenzdomäne durch eine schnelle FFT-Fourier-Transformation transponiert werden, nutzt die farbige Sendung der zweiten Wellenform die Sendung von wenigstens zwei pulsierten sinusförmigen Trägerwellen, um eine Abweichung $\Delta F$ frequenzverschoben, wobei das Vorzeichen dieser Abweichung von einer Sequenz der schnellen Fourier, FFT-Transformation auf die Folgende geschaltet wird.

17. Radarvorrichtung nach Anspruch 11, **dadurch gekennzeichnet, dass**, da die Empfangs signale in der Frequenzdomäne durch eine schnelle FFT-Fourier-Transformation transponiert werden, nutzt die farbige Sendung der zweiten Wellenform die Sendung von wenigstens zwei pulsierten sinusförmigen Trägerwellen, um eine Abweichung $\Delta F$ frequenzverschoben, wobei der Absolutwert dieser Abweichung von N FFT-Sequenzen auf N FFT-Sequenzen geschaltet werden.

18. Radarvorrichtung nach Anspruch 11, **dadurch gekennzeichnet, dass** sich die farbige Sendung der zweiten Wellenform aus der Sendung von wenigstens zwei pulsierten sinusförmigen Wellen zusammensetzt, moduliert durch die orthogonalen Phasencodes.

19. Radarvorrichtung nach Anspruch 11, **dadurch gekennzeichnet, dass** sich die farbige Sendung der zweiten Wellenform aus der Sendung von wenigstens zwei pulsierten sinusförmigen Wellen zusammensetzt, moduliert durch identische Barker-Codes, aber zeitlich umgekehrt.

## Claims

1. Airborne radar device with a given angular coverage in elevation and in azimuth, comprising a transmission system (21), a reception system (22) and processing means carrying out target detection and location measurements, said transmission system comprising:

   - a transmission antenna made up of P linear arrays (111, 112, 113) of radiating elements (2) focusing a transmission beam, said arrays being parallel to one another;
   - at least two waveform generators (25, 26);
   - means for amplifying the transmission signals produced by the waveform generator or generators (25, 26); and
   - means for controlling the transmission signals produced by the waveform generator or generators (25, 26), said means feeding each radiating element (2) with a transmission signal,

   the radiating elements being controlled for:

   simultaneously carrying out electronic scanning of the transmission beam in elevation and for coloured transmission in elevation, the first waveform generator (25) delivering a signal at a first frequency F1 and the second waveform generator (26) delivering a signal at a second frequency F2, each transmission array (111, 112, 113) being split into two sub-arrays (23, 24), the radiating elements (2) of the first sub-array (23) being fed with the signal at the first frequency F1 and the radiating elements (2) of the second sub-array (24) being fed with the signal at the second frequency F2, the coloured transmission being obtained by transmitting over the first sub-array (23) at the first frequency F1 and by transmitting over the second sub-array (24) at the second frequency F2, wherein this radar device is **characterized in that** the reception system (22) comprises a linear array (12) of radiating elements oriented along a direction orthogonal to the linear arrays (11, 111, 112, 113) of the transmission system, the processing means (14) of the reception system (22) calculating, in the elevation plane, a sum channel ($\Sigma$) and a difference channel ($\Delta$) according to the single-pulse technique on the basis of the signals received, on the one hand, at the first frequency F1 and, on the other hand, at the second frequency F2.

2. Radar device according to claim 1, **characterized in that** the control means:

   - control the transmission signals so that each linear array produces a transmission beam along a direction of its own, the set of transmission beams produced being angularly offset in elevation;
   - comprise switches (27, 28) for switching the transmission signals to each of the P linear arrays in succession (111, 112, 113);

   the electronic scanning at transmission being obtained by switching the signal supply of the P arrays, the transmission beams of which are oriented in P separate directions.

3. Radar device according to any one of the preceding claims, **characterized in that** the reception system (22) comprises processing means (14) producing a reception beam by beam-forming (73) by computation in azimuth.

4. Radar device according to any one of the preceding claims, **characterized in that** it detects and locates a target (I, 51) in at least two steps:

    - in a first step, the radar detects a possible target with a maximum detection sensitivity and measures at least the closing velocity of the target moving towards the radar;
    - in a second step, when a target is detected, the radar measures the direction ($\Psi$) and the distance (R) of the target.

5. Radar device according to any one of the preceding claims, **characterized in that** the detection of a target uses very high-resolution spectral analysis followed by long non-coherent integration, these two characteristics being adapted to targets in a collision path.

6. Radar device according to any one of the preceding claims, **characterized in that** it uses two waveforms, a wave generator (25, 26) delivering two waveforms, a first waveform (81, 82, 101, 102, 103, 104) being adapted to high-speed targets located in Doppler frequency mode or in distance measurement mode in the presence of thermal noise, the second, reduced-range waveform being adapted to slow-moving targets that can be detected against a ground clutter background.

7. Radar device according to claim 6, **characterized in that** the coloured transmission of the first waveform is composed of the transmission of at least two continuous waves (65, 66) at frequencies F1 and F2 frequency-shifted by k/T, where T is the Doppler integration time and k is a non-zero relative integer.

8. Radar device according to claim 7, **characterized in that** the ambiguity in angle and distance measurements resulting from the use of the first colour transmission waveform is resolved by transmitting sinusoidal waves spaced apart by a plurality of frequency differences.

9. Radar device according to any one of claims 6 to 8, **characterized in that** for the first waveform, it uses frequency differences ($\Delta$F) between transmission arrays of opposite signs.

10. Radar device according to claim 9, **characterized in that** the resolution of the ambiguity in the angle and distance measurements, in respect of the first waveform, firstly takes place by resolving the distance measurement ambiguity rank by using the plurality of frequency differences.

11. Radar device according to any one of claims 6 to 10, **characterized in that** the second waveform (111, 112, 113, 114, 115, 116) is a pulsed sinusoidal wave.

12. Radar device according to claim 11, **characterized in that** the coloured transmission of the second waveform is composed of the transmission of at least two pulsed sinusoidal waves of carrier frequencies F1 and F2 frequency-shifted by k/T, where T is the Doppler integration time and k is a non-zero relative integer.

13. Radar device according to claim 11, **characterized in that** the coloured transmission of the second waveform is composed of the transmission of at least two pulsed sinusoidal carrier waves frequency-shifted by FR/q, where FR is the pulse repetition frequency and q is a non-zero positive integer.

14. Radar device according to claim 11, **characterized in that** the coloured transmission of the second waveform is composed of the transmission of at least two pulsed sinusoidal carrier waves frequency-shifted by twice the Doppler frequency spread of the ground clutter.

15. Radar device according to claim 11, **characterized in that** the coloured transmission of the second waveform is composed of the transmission of at least two pulsed sinusoidal carrier waves frequency-shifted by twice the maximum Doppler frequency of the ground along the axis of the aircraft carrying said radar device.

16. Radar device according to claim 11, **characterized in that**, since the receive signals are transposed in the frequency domain by an FFT (Fast Fourier Transform), the coloured transmission of the second waveform uses the transmission of at least two pulsed sinusoidal carrier waves frequency-shifted by a frequency difference $\Delta$F, the sign of this

EP 2 296 006 B1

frequency difference being switched from one FFT sequence to the next.

17. Radar device according to claim 11, **characterized in that**, since the receive signals are transposed in the frequency domain by an FFT (Fast Fourier Transform), the coloured transmission of the second waveform uses the transmission of at least two pulsed sinusoidal carrier waves frequency-shifted by a frequency difference ΔF, the absolute value of this frequency difference being switched from N FFT sequences to N FFT sequences.

18. Radar device according to claim 11, **characterized in that** the coloured transmission of the second waveform is composed of the transmission of at least two pulsed sinusoidal waves modulated by orthogonal phase codes.

19. Radar device according to claim 11, **characterized in that** the coloured transmission of the second waveform is composed of the transmission of at least two pulsed sinusoidal waves modulated by identical but time-reversed Barker codes.

FIG.1

FIG.3

FIG.2

FIG.4

FIG.5

66

Porteuse à F1  Porteuse à F2

65

64

62

63

**Bande Doppler cibles**

Fréquence

61

## FIG.6a

Porteuse à F1  Porteuse à F2

65  63  66

64

61  62

**Bande Doppler cibles**  **Bande Doppler cibles**

Fréquence

-6,6 kHz  +6,6 kHz  33kHz

## FIG.6b

FIG.7

FIG.8

FIG.9

FIG.10

PRI = 18 μs

LI = 0,1 μs

F11 ⌐111    F12 ⌐112    F11 ⌐113

## FIG.11a

F21 ⌐114    F22 ⌐115    F21 ⌐116

Une période du code = 37,5 μs

## FIG.11b

## RÉFÉRENCES CITÉES DANS LA DESCRIPTION

**Documents brevets cités dans la description**

- US 2006197699 A1

- FR 09000243

**Littérature non-brevet citée dans la description**

- **PR. JOHN ROULSTON.** The Post-War Development of Fighter Radar in Europe - A British Perspective. *RADAR 2008 à Adélaïde (Australie),* Septembre 2008
- Design Studies for an Airborne Collision Avoidance Radar. **DENNIS LONGSTAFF ; MOSTAFA ABU SHAABAN ; STEFAN LEHMANN.** 5th EMRS DTC Technical Conference. Filtronic Pty Ltd, Juillet 2008

- On the Use of MEMS Phase Shifters in a Low-Cost Ka-band Multifunctional ESA on a Small UAV. **MALMQVIST et al.** MICROWAVE CONFERENCE , 2007, APMC 2007, ASIA-PACIFIC. IEEE, 11 Décembre 2007, 1-4
- **LE CHEVALIER F.** Space-Time Transmission and Coding for Airbornes Radars. *LEIDA-KEXUE-YU-JISHU-RADAR SCIENCE AND TECHNOLOGY,* 01 Décembre 2008, vol. 6 (6), 441-421